# EUROPÄISCHE PATENTANMELDUNG

(11) **EP 4 201 269 A1**
(43) Veröffentlichungstag der Anmeldung: **28.06.2023**
(21) Anmeldenummer: 22212188.1
(22) Anmeldetag: 08.12.2022
(51) Int. Cl.: A47J 31/22, A47J 43/046, A47J 31/053

(54) **VORRICHTUNG ZUR ZUBEREITUNG EINES HEISSGETRÄNKS SOWIE DAFÜR GEEIGNETER ERWEITERUNGS-EINSATZ FÜR EINE KÜCHENMASCHINE**

(30) Priorität: 21.12.2021 DE 102021134172; 27.01.2022 DE 102022101948; 07.02.2022 DE 202022100677 U; 14.04.2022 DE 202022102048 U; 01.06.2022 DE 202022103101 U; 17.08.2022 DE 202022104663 U
(71) Anmelder: Nobellgo UG, 63801 Kleinostheim (DE)
(72) Erfinder: Duran, Erhan, 63801 Kleinostheim (DE)
(74) Vertreter: Staudt, Armin Walter

(57) **Zusammenfassung**

Eine bekannte Vorrichtung zur Zubereitung eines Heißgetränks umfasst eine Heizeinrichtung, die zum Erhitzen einer Flüssigkeit ausgelegt ist, ein Zubereitungs-Gefäß, das mit einer Aufnahme für ein Sammelbad aus der heißen Flüssigkeit und mit einem um eine vertikale Rotationsachse rotierbaren Rotationselement ausgestattet ist, das zum Erzeugen eines Flüssigkeitsstrudels aus der heißen Flüssigkeit in dem Sammelbad geeignet ist, einen Brüheinsatz zum Einsetzen in das Zubereitungs-Gefäß, wobei der Brüheinsatz aufweist: (i) ein Ableitelement und (ii) ein Filterelement mit einer Aufnahme für eine Aufgusssubstanz. Um hiervon ausgehend eine Vorrichtung bereitzustellen, die auf einfache Art und Weise das Aufbrühen von Heißgetränken wie Kaffee oder Tee nach dem eigenen Geschmack ermöglicht, wird vorgeschlagen, dass das Ableitelement zur Abzweigung einer Flüssigkeits-Teilmenge aus dem Flüssigkeitsstrudel und zum Zuführen der Flüssigkeits-Teilmenge zum Filterelement ausgelegt ist, und wobei das Filterelement zum Einleiten der mit Extrakten der Aufgusssubstanz angereicherten Flüssigkeit in das Sammelbad ausgelegt ist.

## Beschreibung

### Technologischer Hintergrund

Die Erfindung liegt auf dem Gebiet der Zubereitung eines Getränks, wie Kaffee, Tee, Glühwein oder anderer Heißgetränke. Insbesondere betrifft die Erfindung eine Vorrichtung und einen Erweiterungs-Einsatz zur Zubereitung eines Heißgetränks.

### Stand der Technik

Es sind verschiedene Vorrichtungen und Methoden zum Aufbrühen von Kaffee oder anderen Heiß- und Aufgussgetränken bekannt, wie beispielsweise von Tee.

Bei Filter-Kaffeemaschinen wird auf Siedetemperatur erhitztes Wasser von oben in einen Filtereinsatz geleitet, in dem eine Aufgusssubstanz - beispielsweise Kaffeepulver auf einem Papierfilter - aufgenommen ist. Das heiße Wasser tropft auf das Kaffeepulver, fließt unter Wirkung der Schwerkraft hindurch und extrahiert dabei ätherische Öle, Aromen und andere Essenzen aus dem Kaffeepulver. Gefiltert durch den Papierfilter gelangt das von dem Pulver befreite und mit Kaffeeextrakten angereicherte Wasser als fertige Kaffee-Flüssigkeit in ein Sammelbad.

Kaffeevollautomaten umfassen ein Mahlwerk zum Zermahlen von Kaffeebohnen zu Kaffeepulver, ein Heizelement zur Herstellung von Heißwasser, einer Brühgruppe zur Behandlung des Kaffeepulvers und eine Pumpe zum Transport des Heißwassers zu der Brühgruppe. Das Kaffeepulver befindet sich auf einem Metallsieb und wird vom Heißwasser unter Druck durchströmt. Durch den Pumpdruck, der beispielsweise für einen Espresso im Bereich von 7,5 bis 9 bar liegt, werden weniger Koffein, Gerbsäuren und Bitterstoffe freigesetzt, was den Espresso-Kaffee bekömmlicher macht. Andererseits kann es durch den Druck, den das erhitzte Wasser auf das Kaffeepulver ausübt, zu einer Verdichtung des Kaffeepulvers kommen, was die Extraktion von Ölen und Essenzen aus dem Kaffee erschwert.

Bei Perkolations-Kaffeemaschinen oder Pump-Perkolatoren wird ein Wasserbad im Bodenbereich einer Kaffeekanne erhitzt, so dass Wasserdampf über ein zentral angeordnetes Steigrohr nach oben geführt und von dort als erhitztes Wasser einem Metallfiltereinsatz zugeführt wird, der mit mechanisch leicht vorverdichtetem Kaffeepulver gefüllt ist. Von dort gelangt das mit Kaffeeextrakten angereicherte Wasser entweder in ein vom Wasserbad räumlich getrenntes Kaffee-Sammelbad, oder es gelangt zurück in das Wasserbad und vermischt sich wieder mit dem dort vorhandenen Wasser, so dass es erneut erhitzt und über das Steigrohr dem Kaffeepulver zugeführt werden kann, um es weiter mit Kaffeeextrakt anzureichern. Dieser umlaufende Prozess wird abgebrochen, wenn der Kaffee die gewünschte Stärke hat.

Bei Zentrifugal-Kaffeemaschinen wird gemahlener Kaffee in einen um seine Mittelachse rotierenden Filtereinsatz eingeschlossen. Erhitztes Wasser wird dem rotierenden Filtereinsatz zugeführt und dabei unter der Wirkung der Zentrifugalkraft durch das Kaffeepulver gedrückt und mit Kaffeeextrakten angereichert. Das mit Kaffeeextrakt angereicherte, heiße Wasser wird aus Seitenwand-Öffnungen des Filtereinsatzes abgezogen, einem Auslass zugeleitet und in einem Sammelgefäß aufgefangen

Bei den aus der DE 1 838 078 U bekannten Methoden und Vorrichtungen zum Aufbrühen von Kaffee wird heißes Kaffeewasser in einem Sammelbehälter bereitgestellt, eine zweiteilige, wasserdurchlässige Trommel, die um ihre vertikale Längsachse rotierbar ist, mit Kaffeepulver gefüllt und seitliche Wasseraustrittsöffnungen werden mit einem Filterstreifen belegt. Die mit dem Kaffeepulver befüllte Trommel wird von oben in das Kaffeewasser eingetaucht, wodurch das heiße Kaffeewasser in Kontakt mit dem Kaffeepulver kommt. Anschließend wird die Trommel innerhalb des Sammelbehälters in eine Position oberhalb der Wasseroberfläche verbracht und um ihre Längsachse rotiert. Das Wasser in der Trommel wird unter Wirkung der Zentrifugalkraft durch das Kaffeepulver und den Filterstreifen nach außen geschleudert und gelangt in den Sammelbehälter. Dieser Eintauch- und Schleuder- Vorgang kann mehrmals wiederholt werden.

Küchenmaschinen werden für die Vor- und/oder Zubereitung von Speisen und zur Behandlung von Nahrungsmitteln eingesetzt, wie etwa zum mechanischen Kneten, Rühren, Zerkleinern oder Schneiden. In der Regel ist ein Rührwerk und häufig auch eine Heizung integriert, die auch eine thermische Behandlung von Nahrungsmitteln ermöglicht.

Eine derartige elektrisch betriebene Küchenmaschine in Form eines kombinierten Koch-Mix-Gerätes ist aus der DE 102 104 42 A1 bekannt. Die Küchenmaschine umfasst ein Basisgerät und einen Mixtopf zur Aufnahme und thermo-mechanischen Behandlung von Nahrungsmitteln. Der Mixtopf ist mit einem Deckel verschließbar. Der Deckel weist eine zentrale Deckelöffnung zum Einfüllen von Nahrungsmitteln auf. Das Basisgerät enthält einen Motor, der ein am Boden des Mixtopfes angeordnetes und um eine Vertikalachse innerhalb des Mixtopfes rotierbares Rührwerk antreibt. Das Rührwerk dient beispielsweise zum Zerkleinern, Mahlen, Kneten oder Durchmischen von Nahrungsmitteln und ist beispielsweise als Knethaken, Schneebesen oder Messersatz ausgelegt.

Aus der CN 109 480 630 A sind ein Verfahren und eine Vorrichtung zum Aufbrühen von Tee oder Kaffee unter Einsatz einer derartigen Küchenmaschine mit einem Zubereitungs-Gefäß und einem am Boden desselben rotierenden Messersatz bekannt. Die Aufgusssubstanz befindet sich innerhalb eines Filterbechers, der eine Seitenwand mit einer Vielzahl von Seitenwandöffnungen und einen Boden mit Bodenöffnungen aufweist. Vom Boden ausgehend können sich nach außen weisende Prallplatten über eine Teilhöhe entlang der Seitenwand des Zubereitungs-Gefäßes erstrecken. Der Filterbecher wird oberhalb des Messersatzes in das Zubereitungs-Gefäß so eingesetzt, dass sich zwischen seiner Seitenwand und der Innenwand des Zubereitungs-Gefäßes ein ringförmiger Strömungskanal bildet, der mit den Seitenwandöffnungen in fluidischer Verbindung steht. Durch Rotation des Messersatzes strömt Heißwasser aufgrund Zentrifugalkraft an der Innenwand des Zubereitungs-Gefäß nach oben und wird mittels der Prallplatten in Richtung auf die Seitenwandöffnungen und damit in den Filterbecher umgelenkt. Nach dem Kontakt mit der Aufgusssubstanz fließt das mit Extrakten angereicherte Heißwasser durch die Bodenöffnungen in das Zubereitungs-Gefäß ab.

### Technische Aufgabenstellung

Bei den bekannten Vorrichtungen und Methoden zum Aufbrühen von Heißgetränken stellt sich grundsätzlich das Problem, das Heißgetränk mit ausreichend hoher Temperatur und angereichert mit den gewünschten Extraktionsstoffen, insbesondere von Geschmacks- und Geruchs-Komponenten zu erzeugen.

Diesem Ziel kann beispielsweise entgegenstehen, wenn die Aufgusssubstanz beim Extraktionsvorgang nicht gleichmäßig befeuchtet wird, oder wenn die dafür erforderlichen Behandlungs-Temperaturen und -Dauern nicht an individuelle Bedürfnisse des Benutzers angepasst sind. Durch aufwändige Maßnahmen können diese Parameter oder mindestens einzelne davon optimiert werden.

Es besteht daher ein permanentes Bedürfnis nach Methoden und Utensilien, die auf einfache Art und Weise das Aufbrühen von Heißgetränken wie Kaffee oder Tee nach dem eigenen Geschmack ermöglichen. Der Erfindung liegt die Aufgabe zugrunde eine Vorrichtung und einen Erweiterungs-Einsatz für eine entsprechende Nachrüstung einer Küchenmaschine bereitzustellen.

### Allgemeine Darstellung der Erfindung

Hinsichtlich der Vorrichtung zur Zubereitung eines Heißgetränks wird die oben genannte Aufgabe durch eine Vorrichtung gelöst, welche umfasst:
(1) eine Heizeinrichtung, die zum Erhitzen einer Flüssigkeit ausgelegt ist,
(2) ein Zubereitungs-Gefäß, das mit einer Aufnahme für ein Sammelbad aus der heißen Flüssigkeit und mit einem um eine vertikale Rotationsachse rotierbaren Rotationselement ausgestattet ist, das zum Erzeugen eines Flüssigkeitsstrudels aus der heißen Flüssigkeit in dem Sammelbad geeignet ist,
(3) einen Brüheinsatz zum Einsetzen in das Zubereitungs-Gefäß, wobei der Brüheinsatz (i) ein Ableitelement und (ii) ein Filterelement mit einer Aufnahme für eine Aufgusssubstanz aufweist,
wobei das Ableitelement zur Abzweigung einer Flüssigkeits-Teilmenge aus dem Flüssigkeitsstrudel und zum Zuführen der Flüssigkeits-Teilmenge zum Filterelement ausgelegt ist, und wobei das Filterelement zum Einleiten der mit Extrakten der Aufgusssubstanz angereicherten Flüssigkeit in das Sammelbad ausgelegt ist.

Die erfindungsgemäße Vorrichtung umfasst ein Zubereitungs-Gefäß, beispielsweise das Zubereitungs-Gefäß einer Küchenmaschine, in dem mittels einer Heizeinrichtung eine Flüssigkeit erhitzt werden kann und an dessen Boden ein Rotationselement angeordnet ist, das um eine vertikale Rotationsachse rotierbar ist. Das Rotationselement ist zum Zerkleinern von Lebensmitteln und insbesondere zum Mahlen von Kaffeebohnen zu Kaffeepulver einsetzbar. Außerdem ist es zum Erzeugen eines Flüssigkeitsstrudels aus der heißen Flüssigkeit geeignet.

Der in das Zubereitungs-Gefäß einsetzbare Brüheinsatz dient als Behandlungseinheit für eine Aufgusssubstanz. Er umfasst ein Ableitelement und ein Filterelement. Das Ableitelement ist aus einem Stück gefertigt oder es umfasst mehrere Teile. Ebenso ist das Filterelement aus einem Stück gefertigt oder es umfasst mehrere Teile. Das Ableitelement und das Filterelement sind separate, voneinander lösbare Bauteile oder sie sind aus einem Stück gefertigt. Bevorzugt ist das Filterelement in das Ableitelement einsetzbar oder an das Ableitelement ansetzbar.

Das Ableitelement ist so ausgelegt, dass es eine Teilmenge aus dem Flüssigkeitsstrudel abzweigen und diesen dem Filterelement als Teilstrom zuführen kann. Das Filterelement weist eine Aufnahme für eine Aufgusssubstanz, die hier auch als "Brühraum" bezeichnet wird. Im oder auf dem Filterelement wird die Aufgusssubstanz mit der heißen von oben nach unten durchströmt reichert diese mit Extrakten an. Das Filterelement wirkt dabei als Sieb oder Filter; es hält Feststoffe der Aufgusssubstanz zurück und lässt die Flüssigkeit passieren. Die mit der Aufgusssubstanz oder mit Extrakten der Aufgusssubstanz angereicherte Flüssigkeit (Heißgetränk) wird von dort in ein Sammelbad innerhalb des Zubereitungs-Gefäßes abgegeben.

Das Rotationselement ist dazu ausgelegt, einen Flüssigkeitsstrudel zu erzeugen, der einen unteren Scheitelpunkt in einer Höhenebene Hs aufweist, wobei das Filterelement vorzugsweise oberhalb der Höhenebene Hs angeordnet ist.

Die Höhenebene Hs für den unteren Scheitelpunkt des Flüssigkeitsstrudels stellt sich in Abhängigkeit von der Flüssigkeitsmenge und der auf die Flüssigkeit wirkenden Zentrifugalkraft ein. Die Höhe des Flüssigkeitsspiegels bei ruhendem Rotationselement (wobei es keinen Flüssigkeitsstrudel gibt), bildet die Obergrenze für die Höhenebene Hs. Die Aufgusssubstanz kann in einer Höhe angeordnet werden, die bei ruhendem Rotationselement oberhalb des Flüssigkeitsspiegels liegt. Dies ist nicht unbedingt erforderlich, aber bevorzugt, um Kontakte zwischen der Aufgusssubstanz und dem Flüssigkeitsbad möglichst zu vermeiden.

Der Abstand zwischen dem Flüssigkeitsstrudel und der Aufgusssubstanz, und insbesondere die Höhendifferenz zwischen der Höhenebene Hs und der Höhenebene H_{F} gewährleistet ein freies Abfließen der mit Extrakten angereicherten Flüssigkeit aus der Aufgusssubstanz und verhindert ein Aufstauen der Flüssigkeit in der Aufgusssubstanz.

Dafür genügen grundsätzlich bereits sehr geringe Abstände (Höhenunterschiede). Es ist allerdings bevorzugt, dass die Aufgusssubstanz möglichst keinen direkten Kontakt mit dem Flüssigkeitsstrudel hat, sondern ausschließlich von der aus dem Flüssigkeitsstrudel abgezweigten Teilmenge von oben nach unten durchströmt wird. Um unerwünschte Kontakte oder gar Überschwemmungen der Aufgusssubstanz zum Beispiel infolge von Verwirbelungen und Füllstandsschwankungen oder permanenten Spritzern möglichst zu vermeiden, hat sich eine Ausführungsform bewährt, bei der der Abstand zwischen dem Rotationselement und dem Filterelement in und entlang der Rotationsachse im Bereich von 0,3cm bis 5cm, vorzugsweise im Bereich von 0,5cm bis 3cm, liegt.

Das Filterelement enthält einen oder mehrere Filter. Dieser ist austauschbar oder fest in das Filterelement eingebaut. Je nach Porenweite und Material (Papier, Stoff, Kunststoff, Metall, Keramik) des Filters werden unterschiedliche Bestandteile der Aufgusssubstanz zurückgehalten und durchgelassen.

Im Hinblick darauf ist bei einer bevorzugten Ausführungsform der erfindungsgemäßen Vorrichtung vorgesehen, dass das Filterelement einen Brühraum mit einem Boden mit Bodenöffnungen aufweist, die in einen Leerraum oberhalb des Flüssigkeitsstrudels münden.

**In dem Brühraum wird die Aufgusssubstanz aufgenommen. Der Boden des Brühraums kann als Filter dienen,** der die Festkörperteilchen der teilchenförmigen Aufgusssubstanz zurückhält, oder die Aufgusssubstanz ist zu diesem Zweck auf einem Filter oder innerhalb eines Filters angeordnet, wie etwa einem Papierfilter oder einem Filterbeutel, wobei der Filter im oder am Brühraum angeordnet wird. Der Brühraum bildet beispielsweise einen Filterhalter, der trichterförmig ausgebildet ist, oder er bildet einen Filterhalter mit vorzugsweise ebenem Boden, auf den ein Filterplättchen aufgelegt wird, vorzugsweise ein Filterplättchen aus Papier. Bei Ausführungsformen, bei denen der Boden des Brühraums als Filter dient, sind die Bodenöffnungen entweder so klein, dass sie als Filterporen in dem Sinne wirken, dass sie Feststoffteilchen der Aufgusssubstanz zurückhalten, oder die Bodenöffnungen sind von einem Filtermaterial bedeckt, das derartig klein ausgelegte Filterporen aufweist. Das Filtermaterial ist in dem Fall bevorzugt in das Filterelement integriert, beispielsweise durch Eingießen in einem Spritzgießverfahren. Es besteht beispielsweise aus einem durch textile Verarbeitung erzeugten Flächengebilde, beispielsweise einem Gestrick oder einem Gewebe, vorzugsweise aus Metall und insbesondere aus Edelstahl.

Bei Ausführungsformen der Vorrichtung, bei denen der Boden des Brühraums nicht als Filter dient, sondern zur Halterung des eigentlichen Filters, hat der Brühraum einen Lochboden mit mehreren Bodenöffnungen (Bodenlöchern), durch die aus dem Filter austretende Flüssigkeit in den Sammelraum austreten kann; bevorzugt sind es 5 bis 50, vorzugsweise 10 bis 40 und besonders bevorzugt mindestens 15 Bodenöffnungen. Der Öffnungsquerschnitt der Bodenöffnungen ist beispielsweise rund, oval oder polygonal. Er liegt vorzugsweise im Bereich von bis 0,8mm² (Durchmesser: 1mm) bis 50mm² (Durchmesser: 8mm). Die Bodenöffnungen sind dabei über eine möglichst große Bodenfläche verteilt, und die Summe der Querschnittsflächen der Bodenöffnungen (Gesamt-Lochquerschnittsfläche) nimmt einen möglichst großen Flächenanteil der Bodenfläche ein. Eine möglichst große Bodenfläche umfasst beispielsweise einen Bereich mit einem Durchmesser zwischen 15 bis 60mm, bevorzugt zwischen 20 bis 50mm, besonders bevorzugt mindestens 25mm. Die Gesamt-Lochquerschnittsfläche liegt beispielsweise im Bereich von 100 bis 500mm², bevorzugt im Bereich von 200 bis 400mm², besonders bevorzugt mindestens 250mm².

Die Verteilung der Bodenöffnungen über eine möglichst große Bodenfläche und die möglichst große Gesamt-Lochquerschnittsfläche hat den Effekt, dass die in das Filterelement eintretende Flüssigkeitsmenge schnell aus dem Filter wieder abfließen kann. Dies gilt beispielsweise im Vergleich zu üblichen, trichterförmigen Filterkaffeehaltern, die zur Aufnahme eines Papierfilters in Tütenform ausgelegt sind. Bei diesen Filterkaffeehaltern ist häufig nur ein einziges, vergleichsweise großes Bodenloch vorhanden, oder wenige, in einer Reihe angeordnete Bodenlöcher. Das in den Papierfilter einfließende, heiße Wasser wird gestaut und kommt dadurch intensiv in Kontakt mit dem darin enthaltenen Kaffeepulver. Allerdings kann es sich dabei abkühlen. Bei Wassertemperaturen unterhalb von etwa 85°C kann sich der Kaffeegeschmack verschlechtern.

Im Gegensatz dazu wirkt das schnellere Abfließen des heißen Wassers bei der erfindungsgemäßen Vorrichtung einem Abkühlen im Filterelement entgegen. Außerdem gelangt das aus dem Filterelement ausfließende Wasser wieder in das Sammelbad mit der erhitzten Flüssigkeit und wird dort wieder auf die voreingestellte Temperatur erwärmt. Der ausreichend intensive Kontakt mit der Aufgusssubstanz wird dadurch erreicht, dass die im Sammelbad auf die voreingestellte Temperatur erhitzte Flüssigkeit im Umlauf solange zum Filterelement geleitet wird, bis das Heißgetränk die gewünschte Intensität hat. Zur Temperierung der Flüssigkeit trägt auch bei, wenn der gesamte Umlaufprozess innerhalb des temperierten Zubereitungs-Gefäßes geführt wird. Die Temperatur der Flüssigkeit im Sammelbad wird daher vorzugsweise konstant gehalten.

Im Vergleich zu einem Filterelement mit schmalem Trichterboden und sich nach oben erweiternden Seitenwandungen kann in einem Brühraum mit größerem Lochboden bei gleicher Bauhöhe ein größeres Innenvolumen bereitgestellt werden. Oder anders gesagt, zum Bereitstellen des gleichen Innenvolumens genügt bei einem im Wesentlichen zylinderförmigen Brühraum eine geringere Bauhöhe als bei einem trichterförmigen (kegelförmigen) Brühraum. Die dadurch ermöglichte, vergleichsweise kompakte Bauform des Brüheinsatzes hat den Vorteil, dass das Ableitelement näher an die Höhenebene des unteren Scheitelpunktes des Flüssigkeitsstrudels rücken kann, und deswegen die Höhe oder Stärke des Flüssigkeitsstrudels geringer ausfallen kann, was sich als Energieersparnis und Geräuschminderung bemerkbar macht.

Das Filterelement kann aus einem Teil oder aus es kann mehreren Teilen gefertigt sein. Bei einer bevorzugten Ausführungsform umfasst die Filterelement-Aufnahme einen Brühraum mit einer Einfüllöffnung und einem Boden mit mindestens einer Bodenöffnung, wobei die Einfüllöffnung vollständig oder teilweise von einem Filter verschlossen oder verschließbar ist. Die Einfüllöffnung des Brühraums liegt in einer Höhenebene H_{F}

Der die Einfüllöffnung verschließende Filter besteht beispielsweise aus Metall, Keramik oder Kunststoff und weist eine Vielzahl feiner Öffnungen auf, die den Durchlass von Teilchen aus der Aufgusssubstanz verhindern. Der Filter kann Teil des Filterelements oder Teil der Ableitelements sein oder er bildet ein eigenständiges Filterbauteil, das mit dem Filterelement oder mit dem Ableitelement verbindbar ist.

Bei einer bevorzugten Ausführungsform ist der Filter als abnehmbare Filterplatte ausgeführt. Die Filterplatte kann biegesteif oder biegsam sein, wobei gegebenenfalls die biegsame Filterplatte zwecks mechanischer Stabilisierung mit einer Träger- insbesondere einer Gitterstruktur unterlegt ist. Die Filterplatte schließt die Einfüllöffnung des Brühraums nach oben hin mindestens teilweise ab. Sie kann aus einem Stück oder aus mehreren Filterplattenstücken bestehen. Sie ist im einfachsten Fall eben ausgebildet. Auf ihr kann sich allerdings ein geschlossener Flüssigkeitsfilm bilden, der eine Entlüftung des Brühraums behindern kann, was einen gleichmäßigen Durchfluss der Flüssigkeit durch das Filterelement und die Aufgusssubstanz erschwert.

Um dies zu verhindern, ist vorteilhafterweise ein mit dem Brühraum kommunizierendes Belüftungsmittel vorgesehen, das bevorzugt als ein zur Einfüllöffnung offenes Entlüftungsrohr oder als eine Erhebung des Filters ausgebildet ist, beispielsweise als Aufwölbung nach oben.

Das mit dem Brühraum kommunizierende - das heißt hier einen Luftaustausch erlaubende - Belüftungsmittel verhindert, dass sich ein Flüssigkeitsfilm ausbildet, der die Einfüllöffnung des Brühraums vollständig abschließt. Der Luftaustausch wird gewährleistet, wenn das Belüftungsmittel eine obere Öffnung in einer oberen Höhenebene hat und eine untere Öffnung, die zum Brühraum hin offen ist. Die jeweiligen Öffnungen sind luftdurchlässig, können aber beispielsweise von einem Filter belegt sein. Die untere Höhenebene liegt beispielsweise auf der Höhenebene H_{F} oder darunter, in welcher die Einfüllöffnung liegt. Und die obere Öffnung liegt etwa 1cm oberhalb dieser Höhenebene.

Es ist bevorzugt als Entlüftungsrohr ausgebildet, das an der Einfüllöffnung endet oder das in den Brühraum hineinragt und durch dessen anderes, oberes Ende ein Lufteintritt gewährleistet ist, das also beispielsweise mindestens 1cm oberhalb der Höhenebene H_{F} liegt. Dabei kann die Einfüllöffnung des Brühraums auch teilweise verschlossen sein, beispielsweise mittels eines Filters, solange nur ein Luftaustausch zwischen dem Brühraum und dem oberen Ende des Entlüftungsrohres gewährleistet ist. Oder das Belüftungsmittel ist als Erhebung, beispielsweise als Aufwölbung der Filterplatte über der Einfüllöffnung ausgebildet, wobei die Aufwölbung so hoch ist, dass sie von einem Flüssigkeitsfilm nicht überschwemmt werden kann, also ebenfalls vorzugsweise 1cm höher ist als die Filterplatten-Höhenebene H_{F}.

Bei einer besonders bevorzugten Ausführungsform ist der Filter selbst das Belüftungsmittel, denn er verfügt ja über Filterporen, die Öffnungen in den Brühraum darstellen. Zu diesem Zweck ist mindestens eine dieser Filterporen, vorzugsweise sind mehrere der Filterporen in einem Bereich angeordnet, in dem sich ein geschlossener Flüssigkeitsfilm nicht ausbilden kann. Es hat sich gezeigt, dass der Flüssigkeitsfilm üblicherweise eine Höhe von etwa 1cm oberhalb der Filter-Ebene nicht überschreitet. Filterporen, die oberhalb dieser Höhe liegen, beispielsweise bei 1,5cm oder höher, sind daher stets oder mindestens größtenteils frei von Flüssigkeit. Um dies zu gewährleisten, hat es sich bewährt, wenn der Filter eine Unebenheit oder mehrere Unebenheiten aufweist. Die Unebenheit ist vorzugsweise als Aufwölbung des Filters, insbesondere der Filterplatte, nach oben ausgeführt. Die Aufwölbung des Filters dient als Störstelle für die Ausbildung eines geschlossenen Flüssigkeitsfilms auf dem Filter, insbesondere auf der Filterplatte, und die Filterporen im Bereich der Erhebung beziehungsweise Aufwölbung gewährleisten die Belüftung des Brühraums.

Bei einer anderen bevorzugten Ausführungsform umfasst der Filter ein textiles Flächengebilde.

Das textile Flächengebilde ist beispielsweise ein Gewirk, Gestrick, Geflecht oder ein Gewebe, das aus Naturfasern, Kunststofffasern oder Metallfasern gefertigt sein und als flaches, plattenförmiges Körpergebilde oder als dreidimensional-räumliches Körpergebilde vorliegen kann. Es kann aus einem einzigen textilen Flächenstück bestehen oder es kann aus mehreren Flächenstücken zusammengesetzt sein.

Das textile Flächengebilde kann selbsttragend oder biegsam ausgeführt sein, wobei aber bevorzugt die Flächengebilde-Form durch ein Stützteil oder durch mehrere Stützteile vorgegeben oder stabilisiert wird, an dem das Filter-Flächengebilde anliegt. Das Stützteil bildet beispielsweise eine planare oder eine dreidimensionale Struktur, an der das textile Flächengebilde befestigt ist und/oder die von dem textilen Flächengebilde überspannt wird.

Das textile Flächengebilde - und alternativ die Filterplatte - überdeckt die zentrale Auslauföffnung des Ableitelements und schließt beim bestimmungsgemäßen Einsatz den Brühraum nach oben hin mindestens teilweise ab und verhindert so, dass aufschwimmende Aufgusssubstanz aus dem Brühraum austritt. Andererseits gelangt die vom Ableitelement abgeführte Flüssigkeit durch den Filter (durch das textile Flächengebilde) in den Brühraum hinein. Das textile Flächengebilde dient daher zur Filterung und ist demgemäß durchlässig für Flüssigkeit aber möglichst undurchlässig für etwaig aufschwimmende Partikel der Aufgusssubstanz. Die herstellungsbedingt vorhandenen Öffnungen bilden Filterporen, deren Größe durch die Maschenweite der Maschenware beziehungsweise durch die Fadendichte des Gewebes bestimmt wird. Es hat sich gezeigt, dass die Filterporen des textilen Flächengebildes für die Flüssigkeit (Wasser) durchlässiger sind als etwa gleich große Bohrungen einer Filterplatte. Dies kann auf die Tortuosität und auf die unregelmäßige Innengeometrie und Umrandung dieser Filterporen zurückgeführt werden, bei denen sich den Flüssigkeits-Durchlass behindernden Effekte, wie Oberflächenspannung und Kapillarkräfte, weniger stark auswirken können als an vergleichsweise geraden, symmetrischen und zylinderförmigen Bohrungen mit glatten Bohrungsrändern.

Im Brühraum wird die Aufgusssubstanz aufgenommen. **Der Boden des Brühraums kann als Filter dienen,** der die Festkörperteilchen der teilchenförmigen Aufgusssubstanz zurückhält, oder die Aufgusssubstanz ist zu diesem Zweck auf einem Filter oder innerhalb eines Filters angeordnet, wie etwa einem Papierfilter oder einem Filterbeutel, wobei der Filter im Brühraum angeordnet wird. Der Brühraum bildet beispielsweise einen Filterhalter, der bevorzugt trichterförmig ausgebildet ist oder er bildet einen Filterhalter mit vorzugsweise ebenem Boden, auf den ein Filterplättchen aufgelegt wird, vorzugsweise ein Filterplättchen aus Papier.

Es hat sich als vorteilhaft erweisen, wenn das Ableitelement in einer Höhenebene H_{A} an einer Innenwand des Zubereitungs-Gefäßes anliegt und sich von außen nach innen zum Filterteil erstreckt.

Das Ableitelement ragt in den Flüssigkeitsstrudel hinein und liegt oberhalb des Filterelements oder auf einer Höhe mit diesem an der Innenwand des Zubereitungs-Gefäßes an. Das mittlere Gefälle des Ableitelements von außen nach innen ist so gering wie möglich. Die Strecke zwischen der Höhenebene H_{A} und dem Filterelement kann beispielsweise ein Gefälle in einem Winkelbereich zwischen 0 und 8 Grad haben und hat vorzugsweise einen Neigungswinkel von maximal 5 Grad, noch besser von maximal 2 Grad. Der minimale Abstand zwischen der Höhenebene H_{A} und dem Filterelement liegt beispielsweise im Bereich von Null bis 1cm, vorzugsweise weniger als 0,8cm.

Das in den Flüssigkeitsstrudel hineinragende Ableitelement leitet daraus einen Flüssigkeits-Teilstrom zur Mitte des Zubereitungs-Gefäßes ab. Das Ableiten kann sich über einen Höhenbereich erstrecken. Die Höhenebene H_{A} definiert die niedrigste Höhe, in der das Ableiten des Flüssigkeits-Teilstroms erfolgt. Dies ist im einfachsten Fall die Höhenebene, in der das Ableitelement an der Innenwand des Zubereitungs-Gefäßes anliegt.

Das Ableitelement kann beispielsweise eine oder mehrere, sternförmig um die Längsachse des Zubereitungs-Gefäßes angeordnete Ablaufrinnen aufweisen, die mit einem Ende in den Flüssigkeitsstrudel hineinragen. Besonders bevorzugt ist aber eine Ausführungsform, bei der das Ableitelement ringförmig mit einem Außenrand, einer Ringoberseite und einer Ringunterseite ausgebildet ist, wobei der Außenrand zur an der Innenwand des Zubereitungs-Gefäßes ausgebildet ist, und wobei im Bereich des Außenrandes Öffnungen zwischen Ringunterseite und Ringoberseite vorgesehen sind.

Durch die im Bereich des Außenrandes vorhandenen Öffnungen, die beispielsweise als Löcher mit rundem, ovalem oder polygonalem Querschnitt oder als radial oder peripher verlaufende Schlitze ausgeführt sind, gelangt die Flüssigkeits-Teilmenge vom Flüssigkeitsstrudel auf die Ringoberseite, von wo sie zum mittig innerhalb des ringförmigen Ableitelements angeordneten Filterelement abfließt. Zu diesem Zweck kann die Ringoberseite ein Gefälle vom Außenrand zum Innenrand aufweisen. Das Gefälle liegt vorzugsweise in einem Winkelbereich zwischen 0 und 8 Grad, und beträgt besonders bevorzugt maximal 5 Grad, noch besser maximal 2 Grad. Infolge der allseitigen Zuflussmöglichkeit für den heißen Teilstrom wird eine besonders gleichmäßige Durchfeuchtung der Aufgusssubstanz erreicht.

Zubereitungs-Gefäße, insbesondere Zubereitungs-Gefäße von Küchenmaschinen, haben häufig einen kreisförmigen Innenquerschnitt und eine Innenwand, die einen Innenraum begrenzt, der sich mindestens über einen Teil seiner Höhe von oben nach unten verjüngt. Im Hinblick darauf weist der Außenrand des Ableitelements der erfindungsgemäßen Vorrichtung vorzugsweise einen nach oben weisenden, umlaufenden und an der Innenwand anliegenden Außenwandbereich (Kragen) auf.

Die Innenwand des Zubereitungs-Gefäßes hat beispielsweise einen nach unten sich konisch verjüngenden Längenabschnitt mit einem Innenkonus. In dem Fall hat der umlaufende Außenwandbereich des Ableitelements in Anpassung an diese Innenkontur ebenfalls einen nach unten sich konisch verjüngenden Längenabschnitt mit einem Außenkonus, wobei der Innen- und Außenkonus so ausgelegt ist, dass er in einer vorgegebenen Höhe mit der Innenwand zur Anlage kommt und dass sich ein flächiger Kontaktbereich zwischen der Innenwand und dem stehkragenförmigen Außenwandbereich des Ableitelements bildet. Dieser flächige Kontaktbereich verbessert die mechanische Führung und die Fixierung des Ableitelements im Zubereitungs-Gefäß, und er schirmt den oberen Bereich des Zubereitungs-Gefäßes vom Flüssigkeitsstrudel und etwaigen unerwünschten Flüssigkeitsspritzern weitgehend ab. Die in Richtung der Innenwand weisende Außenkontur des Außenwandbereichs ist an die Geometrie und den Innendurchmesser der Innenwand in einer vorgegebenen Höhe angepasst. Dadurch wird die Höhe vorgegeben, die das Ableitelement innerhalb des Zubereitungs-Gefäßes einnimmt. Aufgrund seines Eigengewichtes und insbesondere nachdem es mit der Aufgusssubstanz und mit Flüssigkeit befüllt ist, sitzt das Ableitelement auf der nach unten sich konisch verjüngenden Innenwand fest auf.

Eine aufwändige Halterung des Ableitelements beispielsweise am Boden oder am Deckel des Zubereitungs-Gefäßes ist daher nicht erforderlich.

Die Zubereitungs-Gefäß-Innenwand kann über ihre gesamte Höhe glatt, nahtlos und im Querschnitt kreisrund oder oval sein. Bekannte und weit verbreitete Küchenmaschinen haben jedoch ein Zubereitungs-Gefäß mit einer Innenwand, die zwar im Wesentlichen einen kreisrunden Innenquerschnitt hat, wobei sich aber Längsrippen von oben nach unten über mindestens einen Teil der Höhe der Innenwand erstrecken, die in den Innenraum des Zubereitungs-Gefäßes hineinragen.

In dem Zusammenhang erweist sich eine Vorrichtung als vorteilhaft, bei der sich mehrere nach innen ragende Längsrippen von oben nach unten entlang von mindestens einem Teil der Höhe der Innenwand des Zubereitungs-Gefäßes erstrecken, und wobei die Außenkontur des in Richtung der Innenwand weisenden Außenwandbereichs des Ableitelements mehrere nach innen eingestülpte Längsrillen aufweist.

Die Längsrillen korrespondieren gegebenenfalls mit den in den Innenraum des Zubereitungs-Gefäßes hineinragenden Längsrippen, die beispielsweise um den Umfang der Innenwand gleichmäßig verteilt sind, und die sich über mindestens einen Teil der Innenwandhöhe von oben nach unten erstrecken. In dem Fall hat der Außenwandbereich des Ableitelements nach innen eingestülpte Längsrillen, die an die Geometrie und die örtliche Verteilung der Längsrippen angepasst sind.

Beim Einsetzen des Brüheinsatzes können durch Drehung um seine Längsachse die Längsrillen des Ableitelements mit den Längsrippen in Übereinstimmung gebracht und eine drehfeste Rastverbindung zwischen dem Brüheinsatz und dem Zubereitungs-Gefäß erzeugt werden. Dies gilt insbesondere im Zusammenspiel mit den weiter oben erläuterten konischen Längenabschnitten, wenn die Längsrillen und die Längsrippen in diesen Längenabschnitten ineinandergreifen. Die Längsrillen und Längsrippen wirken nach dem Schlüssel-Schloss-Prinzip zusammen, um ein Verdrehen des Ableitelements innerhalb des Zubereitungs-Gefäßes sicher zu verhindern.

Die Längsrippen an der Innenwand des Zubereitungs-Gefäßes wirken als Störstellen für die an der Innenwand zirkulierende Flüssigkeit und erschweren daher die Ausbildung eines stabilen und ausgeprägten, hohen Flüssigkeitsstrudels. Um diese Störungen auszuschalten und einen besonders stabilen und ausgeprägten, hohen Flüssigkeitsstrudel zu erreichen auch bei vergleichsweise geringer Rotationsgeschwindigkeit des Rotationselements zu erreichen, verfügt der Brüheinsatz optional über eine Auskleidung, die die Längsrippen abdeckt oder die die Volumenbereiche zwischen den Längsrippen auffüllt.

Diese Auskleidung dient dazu, innerhalb des Zubereitungs-Gefäßes eine der eigentlichen Innenwand über einen Teil ihrer Höhe eine nach innen vorgelagerte, glatte Wandung bereitzustellen, was zur Stabilisierung der Strömung des Flüssigkeitsstrudels beiträgt Das Ableitelement kann aus einem Teil oder aus es kann mehreren Teilen gefertigt sein. Bei einer besonders bevorzugten Ausführungsform umfasst das Ableitelement ein unteres Behälterteil und ein am unteren Behälterteil lösbar montiertes, oberes Behälterteil, wobei das obere Behälterteil einen von außen nach innen ragenden, umlaufenden Kragen aufweist.

Das Ableitelement ragt in den Flüssigkeitsstrudel, wobei Flüssigkeit aus dem Flüssigkeitsstrudel durch Öffnungen im Bereich des Außenrandes auf die Oberseite des Ableitelements gelangt. Dabei können Flüssigkeitsspritzer aus dem Zubereitungs-Gefäß heraus gelangen. Das obere Behälterteil mit seinem von außen nach innen weisenden, umlaufenden Kragen bildet eine Spritzschutzhaube, die den Innenraum des Ableitelements teilweise überdeckt und damit den unerwünschten Flüssigkeitsspritzern entgegenwirkt.

Von dem umlaufenden Kragen steht vorzugsweise ein nach oben ragendes Abstandselement ab. Dieses kann als Griffteil dienen und erleichtert insoweit die Handhabung des Brüheinsatzes, und es ist außerdem dazu ausgelegt, an der Unterseite des Deckels des Zubereitungs-Gefäßes anzuliegen, oder von der Deckel-Unterseite einen geringen Abstand von vorzugsweise weniger als 1cm einzuhalten.

Bei einer vorteilhaften Ausführungsform der erfindungsgemäßen Vorrichtung bildet das Filterelement eine mehrteilige Filtereinheit, wobei ein unterer Behälterteil des Ableitelements eine Filtereinheit-Aufnahme oder einen Halter für diese Filtereinheit aufweist.

Die Filtereinheit umfasst beispielsweise einen zylinderförmigen oder trichterförmigen Brühraum und eine Filterplatte, die die Öffnung des Brühraums nach oben hin abschließt. Die Filterplatte besteht beispielsweise aus Metall, Keramik oder Kunststoff und weist eine Vielzahl feiner Bohrungen auf, die den Durchlass von Teilchen aus der Aufgusssubstanz verhindern. Sie kann aber auch aus biegsamem Werkstoff, wie etwa aus einem textilen Flächengebilde und insbesondere aus Papier bestehen, wobei sie gegebenenfalls zwecks mechanischer Stabilisierung mit einer Träger- insbesondere mit einer Gitterstruktur unterlegt oder an dieser gestützt und gehalten sein kann.

Die Öffnung des Brühraums kann von einem nach außen ragenden Flansch begrenzt sein. Die Filterplatte kann mittels eines Dichtrings, der den Flansch übergreift, an der Öffnung fixiert werden. Dadurch wird die Filterplatte fest oberhalb des Brühraums fixiert. Die Filtereinheit bildet in dem Fall einen kompakten, einfach zu handhabenden, kapselförmigen Verbund, in dem die Aufgusssubstanz eingeschlossen wird. Beispielsweise kann die Filterplatte in eine obere Nut eines Dichtrings mit umlaufender Doppelnut eingelegt sein, wobei der nach außen ragende Flansch von der unteren Nut des Dichtrings umgriffen wird. Oder der Brühraum hat am oberen Rand eine umlaufende Stufe, auf der die Filterplatte aufliegt und von oben mittels des Dichtrings, der den nach außen ragenden Flansch umgreift, fixiert wird.

Bei einer weiteren bevorzugten Ausführungsform der Vorrichtung weist das Zubereitungs-Gefäß eine Topföffnung und einen Deckel zum mindestens teilweisen Abdecken der Topföffnung auf, wobei der Deckel eine Deckelunterseite hat, die in einer Höhenebene H_{D} verläuft, und wobei vom Ableitelement ein Abstandselement nach oben absteht, das in einer Höhenebene H_{G} endet, wobei gilt: H_{D} > H_{G} > H_{D} + 1cm.

Das Abstandsteil liegt entweder an der Unterseite des Deckels des Zubereitungs-Gefäßes an oder es hat von der Unterseite einen kleinen Abstand von maximal 1cm. Dadurch wird die Höhenposition des Brüheinsatzes innerhalb des Zubereitungs-Gefäßes zusätzlich stabilisiert. Das nach oben abstehende Abstandselement ist beispielsweise ein Griffteil. Dieses erleichtert einerseits das Einsetzen und Entnehmen des Brüheinsatzes. Es dient somit gleichzeitig als Abstandselement beziehungsweise als Widerlager gegen den aufgesetzten Deckel.

Im Folgenden wird ein Verfahren zur Zubereitung eines Heißgetränks unter Einsatz der erfindungsgemäßen Vorrichtung erläutert. Die Zubereitung des Heißgetränks in einem Zubereitungs-Gefäß umfasst die folgenden Verfahrensschritte:
(a) Bereitstellen einer Aufgusssubstanz für das Heißgetränk auf oder in einem Filterelement innerhalb des Zubereitungs-Gefäßes,
(b) Erzeugen eines Stroms aus heißer Flüssigkeit,
(c) Durchströmen der Aufgusssubstanz mit dem Flüssigkeits-Strom unter Bildung der mit Extrakten der Aufgusssubstanz angereicherten Flüssigkeit und
(d) Einleiten der mit Extrakten der Aufgusssubstanz angereicherten Flüssigkeit in ein Sammelbad.

Zum Erzeugen des Flüssigkeits-Stroms in dem Zubereitungs-Gefäß wird ein Flüssigkeitsstrudel erzeugt, und daraus wird eine Flüssigkeits-Teilmenge abgezweigt, und die Aufgusssubstanz wird von der Flüssigkeits-Teilmenge durchströmt.

Das Heißgetränk ist beispielsweise Kaffee, Tee oder Glühwein. Es wird durch Aufbrühen mindestens einer Aufgusssubstanz mit heißer Flüssigkeit erzeugt. Die Aufgusssubstanz ist teilchenförmig, wie beispielsweise Kaffeepulver, Teeblätter, Pflanzenteile, Kräuter, Früchte, Flocken oder Granulat. Sie ist in einem Brühraum eines Filterelements, das einen Filter aufweist, der beispielsweise aus Papier, Textil, Metall, Keramik oder Kunststoff besteht, vollständig oder teilweise eingeschlossen, beispielsweise in einem Filterbeutel, einem Filter in Tütenform oder einem anderen Filterbehälter oder sie befindet sich auf einem Filter, beispielsweise auf einem Filterplättchen. Der Filter kann von einem Filterhalter gehalten werden. Die Poren- oder Maschenweite des Filters ist so ausgelegt, dass feste Teilchen der Aufgusssubstanz möglichst vollständig zurückgehalten werden; sie beträgt beispielsweise weniger als 0,5mm, bevorzugt weniger als 0,1mm und besonders bevorzugt weniger als 0,05mm.

Die Aufgusssubstanz wird von einem Strom heißer Flüssigkeit durchströmt, der aus dem Flüssigkeitsstrudel abgezweigt und im Folgenden auch als "Teilstrom" bezeichnet wird. Der Filter verhindert dabei, dass Teilchen der Aufgusssubstanz in das Heißgetränk eingeschwemmt werden. Die heiße Flüssigkeit ist beispielsweise reines Wasser oder Wasser, das eine andere Komponente oder mehrere andere Komponenten enthält, wie beispielsweise Extrakte der Aufgusssubstanz, wobei in dem Fall die heiße Flüssigkeit sowie der daraus abgezweigte Teilstrom ein noch nicht fertiggestelltes, niedrigkonzentriertes Heißgetränk bildet. Die Behandlung der Aufgusssubstanz mit der heißen Flüssigkeit wird im Folgenden auch als "Extraktionsprozess" bezeichnet.

Das Erzeugen des Teilstroms der heißen Flüssigkeit, der die Aufgusssubstanz durchströmt, umfasst die beiden folgenden Maßnahmen:
(a) Innerhalb des Zubereitungs-Gefäßes wird ein Flüssigkeitsstrudel aus der heißen Flüssigkeit erzeugt. Dies geschieht beispielsweise mithilfe eines Rotationselements, das in einem Bad der heißen Flüssigkeit am Boden des Zubereitungs-Gefäßes angeordnet ist und das um eine vertikal orientierte Rotationsachse rotiert. Bei ausreichend hoher Rotationsgeschwindigkeit bildet sich in dem Flüssigkeitsbad infolge der Zentrifugalkraft ein Flüssigkeitsstrudel aus, bei dem der Flüssigkeitsstand außen höher ist als in der Mitte. Bei einer von Störungen freien Ausbildung erhält der Flüssigkeitsstrudel beispielsweise die Form eines Rotationsparaboloides mit einem Minimum (unterer Scheitelpunkt) in der Mitte und einem Maximum (oberer Scheitelpunkt) an der Wandung des Zubereitungs-Gefäßes. Der äußere Bereich des Flüssigkeitsstrudels bildet in dem Fall einen "oberen Bereich des Flüssigkeitsstrudels" und wird im Folgenden auch so bezeichnet.
(b) Aus dem oberen Bereich des Flüssigkeitsstrudels wird eine Teilmenge der heißen Flüssigkeit abgezweigt und der Aufgusssubstanz als Teilstrom zugeführt.

Dies geschieht vorzugsweise dadurch, dass ein Ableitkörper so in den oberen Bereich des Flüssigkeitsstrudel hineinsticht, dass heiße Flüssigkeit auf, an und/oder in den Ableitkörper gelangen kann. Die Teilmenge (der Teilstrom) aus der heißen Flüssigkeit fließt anschließend in Richtung der Aufgusssubstanz, beispielsweise entlang des in den Flüssigkeitsstrudel ragenden Ableitkörpers. Dieser Ableitkörper, der eine Teilmenge aus dem Flüssigkeitsstrudel abzweigt, bildet ein "Ableitelement" im Sinne der Erfindung.

Die oben unter (a) und (b) erläuterten Maßnahmen zum Erzeugen des die Aufgusssubstanz durchströmenden Teilstroms heißer Flüssigkeit beruhen somit auf der Zentrifugalkraft, vorzugsweise unterstützt durch das Ableiten des Teilstroms mittels des Ableitelements und das Zuführen zur Aufgusssubstanz durch die Gravitationskraft. Durch Kontakt mit der Aufgusssubstanz wird der Teilstrom aus heißer Flüssigkeit mit Extrakten der Aufgusssubstanz angereichert. Die mit Extrakten der Aufgusssubstanz angereicherte heiße Flüssigkeit wird in dem Filterelement gefiltert und in ein Sammelbad eingeleitet, aus dem sie als Heißgetränk entnommen werden kann. Das Sammelbad ist vorzugsweise innerhalb des Zubereitungs-Gefäßes angeordnet.

Bei einer bevorzugten Verfahrensweise wird der Flüssigkeitsstrudel im Sammelbad erzeugt. Das Rotationselement rotiert dabei im Sammelbad, und gleichzeitig wird in das Sammelbad der mit Extrakten der Aufgusssubstanz angereicherte Teilstrom aus heißer Flüssigkeit eingeleitet. Der Flüssigkeitsstrudel wird somit aus dem Sammelbad erzeugt und bildet gleichzeitig einen Teil desselben. Demnach wird die heiße Flüssigkeit im Umlauf geführt, wobei in diesem Umlaufprozess kontinuierlich und gleichzeitig die folgenden Teilprozesse ablaufen: Bereitstellen des Sammelbades mit heißer Flüssigkeit, Erzeugen eines Flüssigkeitsstrudels, Abzweigen einer Teilmenge aus dem Flüssigkeitsstrudel, Zuführen der Teilmenge als Teilstrom zur Aufgusssubstanz, Durchströmen der Aufgusssubstanz mit dem Teilstrom, Anreichern des Teilstroms mit Extrakten der Aufgusssubstanz, Filtern und Einleiten des Teilstroms in das Sammelbad. Der Extraktionsprozess ist bei dieser Verfahrensweise als Umlaufprozess ausgestaltet. Der Flüssigkeits-Teilstrom wird aus dem Flüssigkeitsstrudel entnommen und nach Durchleitung durch das Filterelement mit der darin aufgenommenen Aufgusssubstanz dem Sammelbad und damit auch dem Flüssigkeitsstrudel wieder zugeführt.

Die aus dem Flüssigkeitsstrudel abgezweigte Flüssigkeitsmenge hängt unter anderem vom Füllstand des Sammelbades und von der Kraft ab, die das Rotationselement auf die Flüssigkeit ausübt, die wiederum bei gegebener Form des Rotationselements maßgeblich von der Rotationsgeschwindigkeit bestimmt wird. Bei gegebenem Füllstand und gegebener Form des Rotationselements ist die Flüssigkeitsmenge, die in das Ableitelement befördert wird, durch die Rotationsgeschwindigkeit des Rotationselements einstellbar. Ist die Flüssigkeitsmenge, die dem Filterelement pro Zeiteinheit zugeführt wird größer als die Flüssigkeitsmenge, die die Aufgusssubstanz pro Zeiteinheit durchströmen kann, so kann es zu einem Rückstau an heißer Flüssigkeit vor der Aufgusssubstanz oder auch zu einem Zurückfließen heißer Flüssigkeit in das Sammelbad kommen. Dieser Effekt reguliert und begrenzt gleichzeitig den oben beschriebenen Einfluss der Rotationsgeschwindigkeit.

Bei einer bestimmten Rotationsgeschwindigkeit wird der Grad, mit dem die im Umlauf geführte heiße Flüssigkeit mit Extrakten der Aufgusssubstanz angereichert wird, von der Dauer des Umlaufprozesses bestimmt. Je länger diese ist, umso stärker ist die Anreicherung der heißen Flüssigkeit mit den Extrakten, abgesehen von Sättigungseffekten (bei der Flüssigkeit) und Erschöpfungseffekten (bei der Aufgusssubstanz). Der Anreicherungsgrad und andere Eigenschaften des Heißgetränks, die von der Kontaktdauer zwischen Aufgusssubstanz und der heißen Flüssigkeit abhängen, sind somit durch den Benutzer nach eigenen Wünschen individuell einstellbar.

Die Temperatur der heißen Flüssigkeit wird während des Extraktionsprozesses bevorzugt konstant gehalten oder sie wird variiert. Außer der Rotationsgeschwindigkeit und der Behandlungsdauer sind somit die Temperatur der heißen Flüssigkeit und das Temperaturprofil während des Extraktionsprozesses weitere freie Parameter zur Einstellung der individuell bevorzugten Eigenschaften des Heißgetränks.

Das Einstellen und Halten einer Temperatur oder eines Temperaturprofils wird dadurch vereinfacht, dass die temperaturbestimmenden Prozesse, wie das Erhitzen der Flüssigkeit, das Erzeugen des Flüssigkeitsstrudels, das Ableiten des Flüssigkeits-Teilstroms und dessen Zufuhr zur Aufgusssubstanz und auch der Extraktionsprozess innerhalb desselben, beheizbaren Zubereitungs-Gefäßes erfolgen.

Häufig ist es erwünscht, dass die Aufgusssubstanz in einer vorgegebenen Richtung von der heißen Flüssigkeit durchströmt wird. Bei Einwirkung der Schwerkraft: von oben nach unten, ist es von Vorteil, wenn der Flüssigkeitsstrudel einen unteren Scheitelpunkt in einer Höhenebene Hs aufweist, und sich die Aufgusssubstanz oberhalb der Höhenebene Hs befindet.

Durch den Höhen-Abstand zwischen dem Flüssigkeitsstrudel und der Aufgusssubstanz ist ein freies Abfließen der mit Extrakten angereicherten Flüssigkeit aus der Aufgusssubstanz gewährleistet und ein Aufstauen der Flüssigkeit in der Aufgusssubstanz wird verhindert.

Dafür genügen grundsätzlich auch sehr geringe Abstände. Es ist allerdings bevorzugt, dass die Aufgusssubstanz möglichst keinen direkten Kontakt mit dem Flüssigkeitsstrudel hat, sondern ausschließlich von der aus dem Flüssigkeitsstrudel abgezweigten Teilmenge von oben nach unten durchströmt wird. Um unerwünschte Kontakte oder gar Überschwemmungen der Aufgusssubstanz zum Beispiel infolge von Verwirbelungen und Füllstandsschwankungen oder permanenten Spritzern möglichst zu vermeiden, hat sich ein Abstand zwischen der Höhenebene Hs und der Aufgusssubstanz im Bereich von 0,3cm bis 5cm, vorzugsweise im Bereich von 0,5cm bis 3cm, als günstig erwiesen.

Die genannten Bereichsgrenzen für den Abstand liefern einen Beitrag zur Lösung der technischen Aufgabe, weil bei einem Abstand von weniger als 0,3cm die Gefahr permanenter unerwünschte Kontakte der Aufgusssubstanz besteht. Bei einem Abstand von mehr als 3cm wird der Raum, der innerhalb des Zubereitungs-Gefäßes für die Aufnahme und für die Behandlung der Aufgusssubstanz zur Verfügung verringert und/oder es muss ein weit nach oben reichender Flüssigkeitsstrudel erzeugt werden, wofür eine hohe Zentrifugalkraft und damit bei gegebener Konfiguration von Flüssigkeitsmenge und Konstruktion des Rotationselements eine hohe Rotationsgeschwindigkeit des Rotationselements erforderlich ist. Bei hohen Rotationsgeschwindigkeiten kann es wiederum zu unerwünschten Turbulenzen im Sammelbad und vermehrt zu Störungen bei der Ausbildung des Flüssigkeitsstrudels kommen, die den Umlaufprozess und damit einhergehend das Ergebnis des Extraktionsprozesses schlechter reproduzierbar machen.

Die Höhenebene Hs für den unteren Scheitelpunkt des Flüssigkeitsstrudels stellt sich in Abhängigkeit von der Flüssigkeitsmenge und der auf die Flüssigkeit wirkenden Zentrifugalkraft ein. Die Höhe des Flüssigkeitsspiegels bei ruhendem Rotationselement (wobei es keinen Flüssigkeitsstrudel gibt), bildet die Obergrenze für die Höhenebene Hs. Die Aufgusssubstanz kann in einer Höhe angeordnet werden, die bei ruhendem Rotationselement oberhalb des Flüssigkeitsspiegels liegt. Dies ist nicht unbedingt erforderlich, aber bevorzugt, um Kontakte zwischen der Aufgusssubstanz und dem Flüssigkeitsbad möglichst zu vermeiden.

Bei einer bevorzugten Verfahrensweise wird zum Abzweigen der Flüssigkeits-Teilmenge ein in den Flüssigkeitsstrudel hineinragendes Ableitelement eingesetzt, über das die Flüssigkeits-Teilmenge infolge der Schwerkraft oder einer anderen Kraft zur Mitte des Zubereitungs-Gefäßes und zum Filterelement hin abfließt. Das Ableitelement ragt dabei vorzugsweise in einer Höhenebene H_{A} in den Flüssigkeitsstrudel hinein. Das Ableitelement kann auf der Strecke zwischen der Höhenebene H_{A} und dem Filterelement ein Gefälle aufweisen, das beispielsweise in einem Winkelbereich zwischen 0 und 8 Grad, bevorzugt maximal 5 Grad, noch besser bei maximal 2 Grad liegt.

Damit die abgezweigte Teilmenge als Teilstrom zum Filterelement gelangt, genügt ein geringes Gefälle, sogar ein Neigungswinkel von Null Grad und sogar eine Gefälle in die andere Richtung (Steigung von innen nach außen), weil die aus dem Flüssigkeitsstrudel permanent abgezweigte Flüssigkeit die auf oder in dem Ableitelement bereits vorhandene Flüssigkeit in Richtung des Filterelements verdrängt. Je größer das mittlere Gefälle des Ableitelements ist, umso größer ist die Höhendifferenz zwischen der Aufgusssubstanz und der Höhenebene H_{A} und umso höher muss der Flüssigkeitsstrudel angelegt werden. Daher ist das mittlere Gefälle des Ableitelements so gering wie möglich und hat vorzugsweise einen Neigungswinkel von maximal 5 Grad, besonders bevorzugt maximal 2 Grad. Das mittlere Gefälle ergibt sich dabei aus der Höhendifferenz zwischen der Höhenebene H_{A} und der Höhenebene H_{F}, in der der Flüssigkeits-Teilstrom in das Filterelement eintritt. Diese Höhendifferenz liegt beispielsweise im Bereich von Null bis 1cm, vorzugsweise bei weniger als 0,8cm.

Das Ableitelement ragt in den Flüssigkeitsstrudel hinein und leitet daraus einen Flüssigkeits-Teilstrom ab. Das Ableiten kann sich über einen Höhenbereich erstrecken. Die Höhenebene H_{A} definiert die niedrigste Höhe, in der das Ableiten des Flüssigkeits-Teilstroms erfolgt. Dies ist im einfachsten Fall die Höhenebene, in der das Ableitelement an der Innenwand des Zubereitungs-Gefäßes anliegt.

Hinsichtlich des Erweiterungs-Einsatzes wird die oben angegebene technische Aufgabe gelöst durch einen Erweiterungs-Einsatz, der aufweist:
(i) eine Ableitelement,
(ii) ein Filterelement mit einer Aufnahme für eine Aufgusssubstanz,
wobei das Ableitelement zur Abzweigung einer Flüssigkeits-Teilmenge aus einem Flüssigkeitsstrudel und zur Zufuhr der Flüssigkeits-Teilmenge zum Filterelement ausgelegt ist, und wobei das Filterelement zum Ableiten einer mit der Aufgusssubstanz oder mit Extrakten der Aufgusssubstanz angereicherten Flüssigkeit in ein Sammelbad ausgelegt ist.

Der Erweiterungs-Einsatz kann zur Nachrüstung eines Zubereitungs-Gefäßes verwendet werden, insbesondere des Zubereitungs-Gefäßes einer Küchenmaschine, um deren Einsatzmöglichkeiten hinsichtlich der Herstellung von Heißgetränken, wie Tee, Kaffee, Kakao oder Glühwein zu erweitern. Er umfasst ein Ableitelement und ein Filterelement. Bevorzugt bilden das Ableitelement und das Filterelement separate Einheiten, die wiederum aus einem Teil oder aus mehreren Teilen bestehen können. Bevorzugt ist das Filterelement in das Ableitelement einsetzbar oder es ist an das Ableitelement ansetzbar.

Das Ableitelement und das Filterelement des erfindungsgemäßen Erweiterungs-Einsatzes bilden einen Brüheinsatz, der zum Einsatz in einem Zubereitungs-Gefäß der erfindungsgemäßen Vorrichtung geeignet ist. Das im Rahmen der Beschreibung des Verfahren und der Vorrichtung zu dem Brüheinsatz Gesagte gilt ebenso für den Erweiterungs-Einsatz gemäß der Erfindung.

Durch Verwendung des erfindungsgemäßen Erweiterungs-Einsatzes ist die Küchenmaschine für die Zubereitung eines Heißgetränks, insbesondere von Filterkaffe einsetzbar. Funktionen der Küchenmaschine, wie etwa die Funktionen zum Zerkleinern und Rühren, der Einstellung und Regelung der Temperatur des Wasserbades im Gefäß-Innenraum, sowie zur Einstellung der Haltedauer der Temperatur (Timer) können für diese Anwendung sinnvoll genutzt werden.

Bei einer bevorzugten Ausführungsform umfasst der Erweiterungs-Einsatz eine Auskleidung, die dazu ausgelegt ist, Längsrippen des Zubereitungs-Gefäßes abzudecken oder Volumenbereiche zwischen solchen Längsrippen aufzufüllen.

Bei einer weiteren bevorzugten Ausführungsform umfasst der Erweiterungs-Einsatz ein Flüssigkeitsstrudel-Verstärkerelement, das auf ein Rotationselement aufsetzbar ist.

Das Verstärkerelement erleichtert die Ausbildung eines Flüssigkeitsstrudels mittels des Rotationselements. Es ist beispielsweise als biegesteife Lamelle, Paddel, Schaufel oder dergleichen ausgeführt und auf das Rotationselement aufsetzbar. Um auch bei Rotation des Rotationselement eine stabile Lagerung des Verstärkerelements zu gewährleisten, haben sich Formschluss-Verbindungen bewährt, wie beispielsweise Rastmittel, die das Rotationselement insbesondere im achsnahen Bereich der vertikalen Rotationsachse untergreifen.

### Ausführungsbeispiel

Nachfolgend wird die Erfindung anhand eines Ausführungsbeispiels und einer Patentzeichnung näher erläutert. Im Einzelnen zeigt
- **Figur 1**: ein Zubereitungs-Gefäß einer Küchenmaschine mit darin eingesetztem Brüheinsatz für Heißgetränke in einer Seitenansicht und in schematischer Darstellung,
- **Figur 2**: eine dreidimensionale Linien-Darstellung einer Ausführungsform des Brüheinsatzes für Heißgetränke in einer Seitenansicht,
- **Figur 3**: eine weitere dreidimensionale Darstellung einer Ausführungsform des Brüheinsatzes für Heißgetränke in einer Ansicht auf die Unterseite,
- **Figur 4**: die Ausführungsform des Brüheinsatzes für Heißgetränke von Figur 2 in einer dreidimensionalen Explosionsdarstellung,
- **Figur 5**: die Ausführungsform des Brüheinsatzes für Heißgetränke von Figur 2 in einer zweidimensionalen Explosionsdarstellung in Seitenansicht,
- **Figur 6**: ein oberes Gehäuseteil eines Ableitelements des Brüheinsatzes für Heißgetränke von Figur 2 in einer dreidimensionalen Darstellung mit einer Ansicht auf die Unterseite,
- **Figur 7**: das obere Gehäuseteil von Figur 6 in einer Draufsicht, und
- **Figur 8**: ein unteres Gehäuseteil eines Ableitelements des Brüheinsatzes für Heißgetränke von Figur 2 in einer dreidimensionalen Darstellung mit einer Ansicht auf die Oberseite,
- **Figur 9**: das untere Gehäuseteil von Figur 8 in einer dreidimensionalen Darstellung mit einer Ansicht auf die Unterseite,
- **Figur 10**: einen Filterhalter als Teil des Filterelements des Brüheinsatzes für Heißgetränke von Figur 2 in einer dreidimensionalen Darstellung mit einer Ansicht auf die Unterseite,
- **Figur 11**: einen Silikonring und eine Filterplatte als Teil des Filterelements des Brüheinsatzes für Heißgetränke von Figur 2 in einer dreidimensionalen Explosionsdarstellung,
- **Figur 12**: einen Querschnitt des Silikonrings von Figur 11 mit eingesetzter Filterplatte in schematischer Darstellung,
- **Figur 13**: einen Schaufelaufsatz für ein Rotationselement zur Verstärkung des Flüssigkeitsstrudels,
- **Figur 14**: eine Küchenmaschine mit einem Mixtopf einschließlich darin eingesetztem Brüheinsatz gemäß der Erfindung in einem Ausschnitt und in schematischer Darstellung,
- **Figur 15**: eine weitere Ausführungsform einer geschlossenen Filtereinheit als Teil des Brüheinsatzes für Heißgetränke in einer dreidimensionalen Darstellung,
- **Figur 16**: die Filtereinheit von Figur 15 bei abgenommener oberer Filterplatte in einer Explosionsdarstellung mit einem Rundfilter mit einer Ansicht auf den Lochboden,
- **Figur 17**: einen Querschnitt des Silikonrings der Filtereinheit von Figur 15 mit eingesetzter Filterplatte in schematischer Darstellung,
- **Figur 18**: einen Schaufelaufsatz für ein Rotationselement zur Verstärkung des Flüssigkeitsstrudels in einer dreidimensionalen Darstellung,
- **Figur 19**: den Schaufelaufsatz von Figur 18 in einer Draufsicht auf den Adapter,
- **Figur 20**: eine weitere Ausführungsform des Brüheinsatzes für Heißgetränke in einer dreidimensionalen Darstellung und in einer seitlichen Ansicht auf das Ableitelement von schräg oben,
- **Figur 21**: eine weitere Ausführungsform des Brüheinsatzes für Heißgetränke in einer dreidimensionalen Darstellung und in einer Ansicht auf das Ableitelement von schräg oben,
- **Figur 22**: eine weitere Ausführungsform des Brüheinsatzes für Heißgetränke in einer dreidimensionalen Darstellung und in einer Ansicht auf das Ableitelement von schräg oben,
- **Figur 23**: die Ausführungsform des Brüheinsatzes von Figur 22 in einer Seitenansicht,
- **Figur 24**: eine weitere Ausführungsform des Brüheinsatzes für Heißgetränke in einer dreidimensionalen Linien-Darstellung und in einer Ansicht auf das Ableitelement von schräg oben,
- **Figur 25**: eine dreidimensionale Darstellung des Ableitelements von Figur 24 in einer anderen, fotographischen Darstellungsweise,
- **Figur 26**: eine dreidimensionale Darstellung der Filtereinheit des Brüheinsatzes von Figur 24 in einer fotographischen Darstellungsweise,
- **Figur 27**: die Ausführungsform des Brüheinsatzes von Figur 24 mit Ableitelement und Filtereinheit in einer Explosionsdarstellung, und
- **Figur 28**: eine dreidimensionale fotographische Darstellung des Brüheinsatzes von Figur 24 in einer Seitenansicht.

Die Erfindung wird anhand eines Einsatzes zum Aufbrühen von Kaffee näher erläutert (im Folgenden auch als "Brüheinsatz" bezeichnet), der für die Verwendung mit dem Mixtopf einer Küchenmaschine ausgelegt ist.

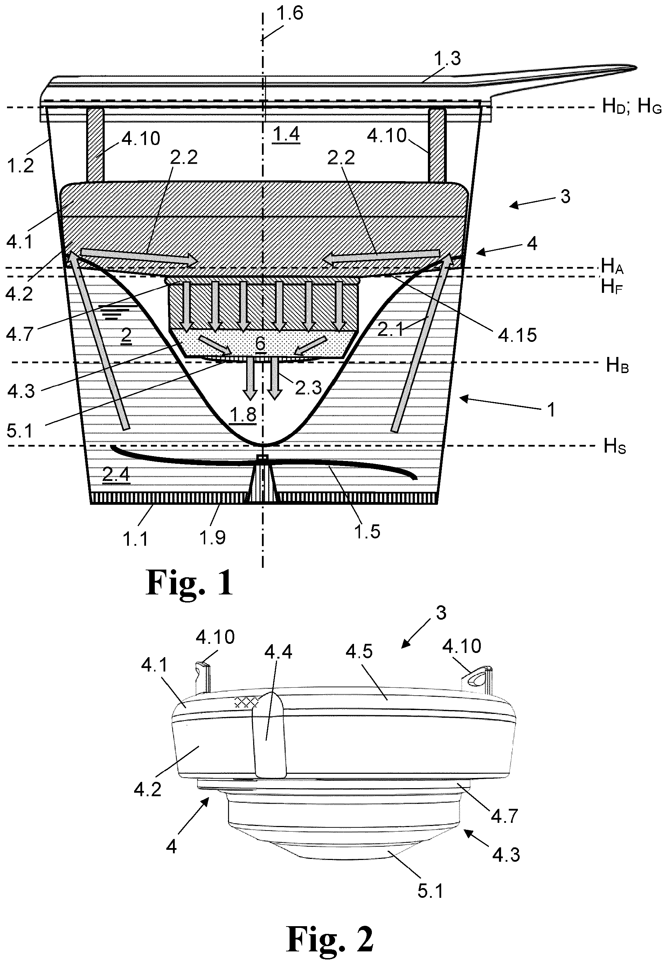

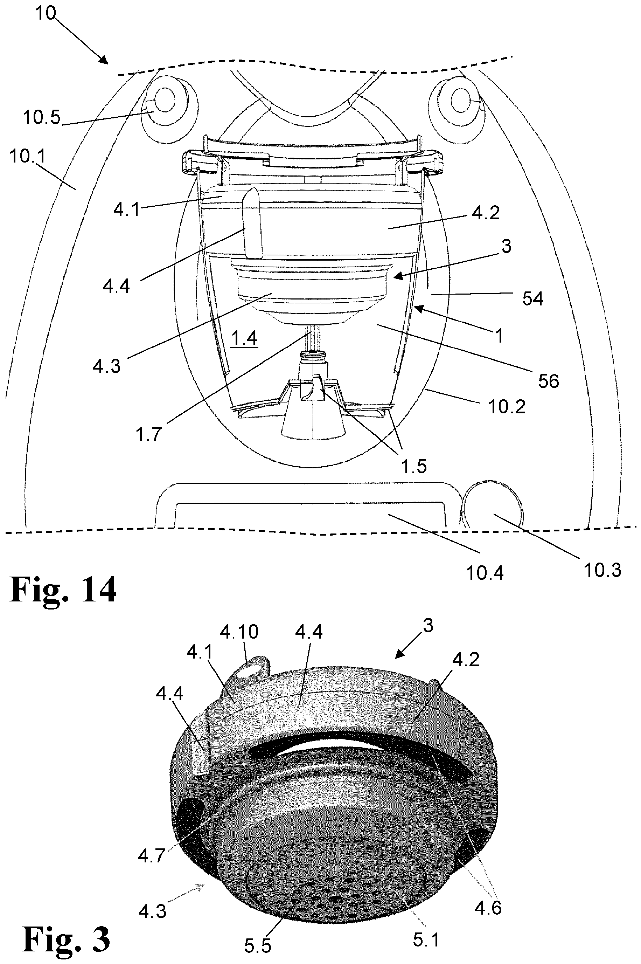

**Figur 1** zeigt in schematischer Darstellung einen Zubereitungs-Gefäß, beispielsweise einen Mixtopf 1, mit einem Boden 1.1, einer im Wesentlichen rotationssymmetrischen Seitenwand 1.2 und einem Deckel 1.3. Der Boden 1.1 und die Seitenwand 1.2 begrenzen einen Mixtopf-Innenraum 1.4. Am Mixtopf-Boden 1.1 ist ein Messersatz 1.5 angeordnet, der um eine vertikale Rotationsachse 1.6 rotierbar ist. Der Innenraum 1.4 des Mixtopfes 1 verjüngt sich von oben nach unten. Die Innenwandung des Mixtopfes 1 weist mehrere nach innen in den Mixtopf-Innenraum 1.4 ragende Längsrippen 1.7 (Figur 14) auf, die um den Umfang der Innenwandung gleichmäßig verteilt sind, und die sich über einen Teil der Innenwandungshöhe von oben nach unten erstrecken. Weiterhin befindet sich am Mixtopf-Boden 1.1 eine Heizeinrichtung 1.9, die zum Erhitzen eines im Mixtopf-Innenraum 1.4 vorhandenen Garguts oder einer Flüssigkeit ausgelegt ist.

Der Messersatz 1.5 dient zum Mischen, Zerkleinern und Kneten von Nahrungsmittel und ist unter anderem auch zum Mahlen von Kaffeebohnen zu Kaffeepulver geeignet. Die Küchenmaschine verfügt über eine (in der Figur nicht dargestellte) Heizeinrichtung, mittels der im Innenraum 1.4 ein Wasserbad 2.4 auf eine Temperatur bis zu 100°C erhitzt werden kann. Durch Rotation des Messersatzes 1.5 um die Rotationsachse 1.6 kann in dem Wasserbad 2.4 ein Wasserstrudel 2 erzeugt werden. Wie in Figur 1 schematisch dargestellt, hat der Wasserstrudel 2 im Wesentlichen die Form eines Rotationsparaboloids mit einem unteren Scheitelpunkt in einer Höhenebene Hs und mit einem Maximum an der Seitenwand 1.2.

In den Mixtopf 1 ist ein Brüheinsatz ortsfest eingesetzt, dem insgesamt die Bezugsziffer 3 zugeordnet ist und von dem ein erstes Ausführungsbeispiel im Folgenden in Verbindung mit den Figuren 2 bis 12 erläutert wird. Der Brüheinsatz 3 ist aus mehreren Teilen zusammengefügt. Dazu gehören ein Basiselement 4, das sich aus einem Spritzschutzteil 4.1, einem Auffangteil 4.2 und einem Filterhalter-Aufnahmeteil 4.3 zusammensetzt.

Von der Oberseite des Spritzschutzteils 4.1 stehen Haltegriffe 4.10 senkrecht nach oben ab, die in einer Höhenebene H_{G} enden. Das Spritzschutzteil 4.1 ist über eine Rastverbindung mit dem Auffangteil 4.2 lösbar verbunden.

Die Teile 4.2 und 4.3 sind aus einem Stück gefertigt, das insgesamt die Geometrie eines zweifach gestuften, beidseitig offenen Rings hat, mit einer oberen, konischen Seitenwand 4.12, einer unteren Seitenwand und dazwischen eine Ausbeulung 4.7, die als Silikonring-Aufnahme dient. Die untere Seitenwand hat einen oberen zylinderförmigen Abschnitt 4.13 und einen unteren konischen Abschnitt 4.14, der in einer zentralen Öffnung 4.11 mündet.

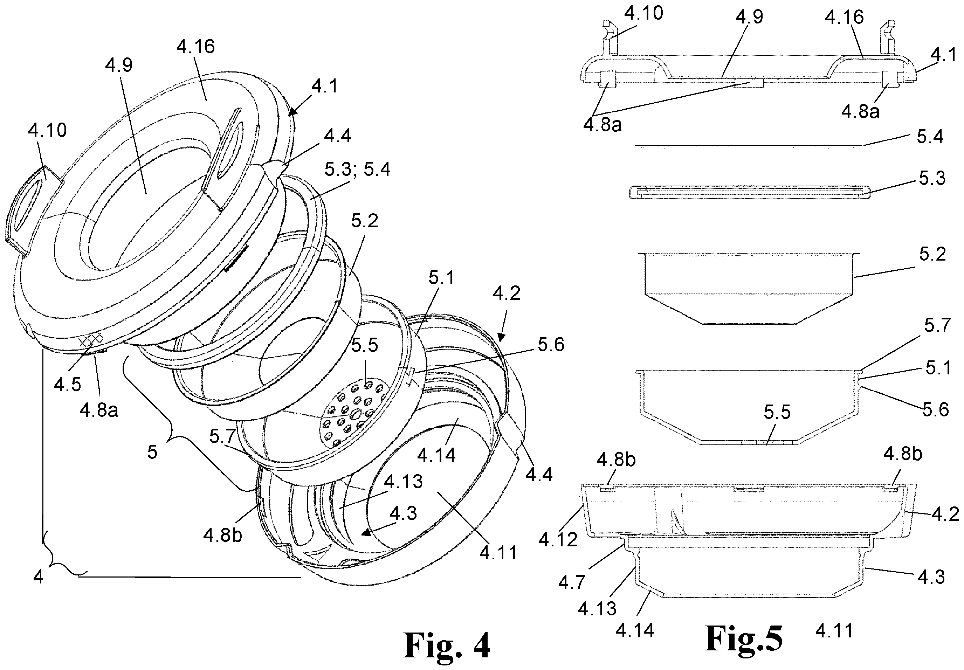

In das Filterhalter-Aufnahmeteil 4.3 ist eine kapselförmige Filtereinheit 5 zur Aufnahme von Kaffeepulver 6 eingesetzt, die einen Filterhalter 5.1, eine Filterplatte 5.4 und einen Silikonring 5.3 aufweist. Die Filtereinheit 5, deren Bestandteile und Funktionen werden weiter unten anhand Figur 4 näher erläutert werden, stellt ein Ausführungsbeispiel für ein "Filterelement" im Sinne dieser Erfindung dar.

Der Brüheinsatz 3 wird in den Mixtopf-Innenraum 1.4 eingesetzt, wobei das Auffangteil 4.2 an der Mixtopf-Seitenwand 1.2 anliegt. Der Außendurchmesser des Auffangteils 4.2 ist so ausgelegt, dass es im bestimmungsgemäßen Betrieb in einer Höhenebene H_{A} an der Seitenwand 1.2 zu liegen kommt und dort mit seiner Unterseite in den oberen Bereich des Wasserstrudels 2 hineinragt. Gleichzeitig befinden sich das Filterhalter-Aufnahmeteil 4.3 und der darin eigesetzte Filterhalter 5.1 vollständig außerhalb des Wasserstrudels 2. Der Filterhalter 5.1 hat eine obere Öffnung, durch die der aus dem Wasserstrudel abgeleitete Teilstrom in die Filtereinheit 5 eintritt, und er hat einen Boden mit mehreren Bodenlöchern 5.5, aus denen der mit Extrakten der Aufgusssubstanz angereicherte Flüssigkeitsstrom ausstritt. Die obere Öffnung des Filterhalters 5.1 befindet sich in einer Höhenebene H_{F}, die etwa 0,5cm unterhalb der Höhenebene H_{A} liegt. Der Boden mit den Bodenlöchern 5.5 ragt aus dem unteren Ende des Filterhalter-Aufnahmeteils 4.3 heraus und liegt in einer Höhenebene H_{B}. Der Abstand zwischen der Höhenebene H_{B} und dem Messersatz 1.5 in und entlang der Rotationsachse 1.6 beträgt etwa 1,5 cm. Bei aufgesetztem Deckel 1.3 verläuft die Deckelunterseite in der Höhenebene H_{D} und die Haltegriffe 4.10 liegen an der Deckel-Unterseite an.

Über die Höhe des Mixtopfes 1 gesehen, verteilen sich die einzelnen Höhenebenen im Ausführungsbeispiel wie folgt (vom Mixtopf-Boden aus gesehen): Hs=5cm; H_{B} =6,5cm; H_{F}=9cm; H_{A}=9,5cm; H_{D}=17cm; H_{G}=17cm

Die Richtungspfeile 2.1, 2.2 und 2.3 deuten die Strömung des erhitzten Wassers vom Wasserstrudel 2 durch den Brüheinsatz 3 an. Über schlitzförmige peripher verlaufende Öffnungen im Auffangteil 4.2 (in Figur 3 erkennbar) gelangt heißes Wasser aus dem Wasserstrudel 2 in das Basiselement 4 und wird über eine Rampe mit geringem Gefälle (0,5 Grad) in die Filtereinheit 5 geleitet, wie dies weiter unten anhand der Figuren 4 und 5 noch näher erläutert wird.

Soweit in den Figuren 2 bis 14 die gleichen Bezugsziffern verwendet werden wie in Figur 1, so sind damit identische oder äquivalente Bauteile oder Bestandteile der Vorrichtung bezeichnet, wie sie oben erläutert sind.

**Figur 2** zeigt eine dreidimensionale Darstellung des Brüheinsatzes 3 in einer Seitenansicht. Zu erkennen sind das Spritzschutzteil 4.1 mit den angesetzten Haltegriffen 4.10, die mit dem Spritzschutzteil 4.1 formschlüssig verbundene Einheit aus Auffangteil 4.2 und Filterhalter-Aufnahmeteil 4.3, durch dessen zentrale Öffnung ein Teil des Filterhalters 5.1 nach unten herausragt. Die Bezugsziffer 4.4 bezeichnet eine von insgesamt drei Längsrillen, die um den Umfang sowohl des Spritzschutzteils 4.1 als auch des Auffangteils 4.2 gleichmäßig verteilt sind. Die Längsrillen 4.4 korrespondieren mit Längsrippen 1.7 (Figur 14), die sich an der Innenwand des Mixtopfes 1 von oben nach unten erstrecken. Die Bezugsziffer 4.5 bezeichnet ein Noppenfeld, dessen Funktion weiter unten anhand von Figur 4 noch näher erläutert wird.

**Figur 3** zeigt den Brüheinsatz 3 anhand einer anderen dreidimensionalen Darstellung mit einer Ansicht auf die Unterseite. Es ist erkennbar, dass das Auffangteil 4.2 an seiner Unterseite mit peripher verlaufenden Öffnungsschlitzen 4.6 versehen ist, die einen Zutritt von heißem Wasser aus dem Wasserstrudel 2 in den Innenraum des Basiselements 4 erlauben. Die sichtbare Ausbeulung 4.7 im Bereich zwischen dem Auffangteil 4.2 und dem Filterhalter-Aufnahmeteil 4.3 dient zur Aufnahme des Silikon-Rings 5.3, der zur Filtereinheit 5 gehört.

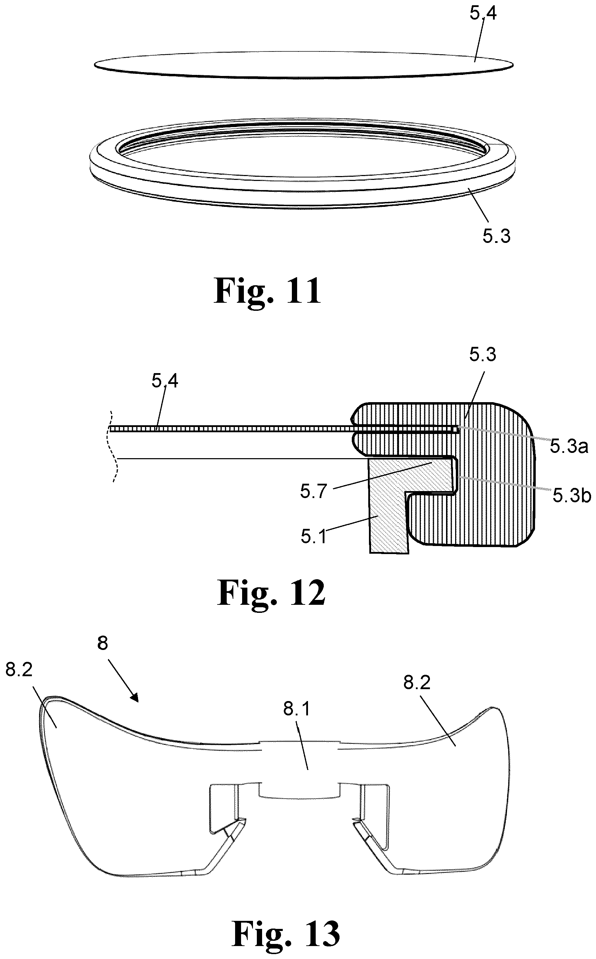

**Figur 4** und **Figur 5** zeigen in unterschiedlichen Ansichten und Darstellungsweisen jeweils Explosionsdarstellungen des Brüheinsatzes 3 mit folgenden Bauteilen beziehungsweise Bestandteilen:
- Das Basiselement 4 aus Kunststoff mit den Bestandteilen: Spritzschutzteil 4.1 mit den Haltegriffen 4.10 an seiner Oberseite und dem Rastmittel 4.8a sowie einem Noppenfeld 4.5 zur erleichterten Identifizierung der Position des Rastmittels 4.8a. Das Spritzschutzteil 4.1 weist eine ringförmige Spritzschutzhaube 4.16 auf. Der Ring-Innenrand der Spritzschutzhaube 4.16 ist nach unten umgebogen, so dass er zusätzlich zum Spritzschutz beiträgt. Das Auffangteil 4.2 im Verbund mit dem Filterhalter-Aufnahmeteil 4.3 und der Ausbeulung 4.7 (Silikonring-Aufnahme). Das Auffangteil 4.2 ist mit einem Gegenrastmittel 4.8b ausgestattet, das mit dem Rastmittel 4.8a am Spritzschutzteil 4.1 unter Ausbildung einer formschlüssigen Verbindung zusammenwirkt. Filterhalter-Aufnahmeteil 4.3 mit einem sich nach unten verjüngenden Innenkonus 4.14, der in einer kreisförmigen zentralen Öffnung 4.11 endet.
- Die Filtereinheit 5 mit den Bestandteilen: trichterförmiger Filterhalter 5.1 aus Kunststoff, dessen Boden mit Bodenlöchern 5.5 mit einem Durchmesser im Bereich von 1mm bis 20mm versehen ist (im Ausführungsbeispiel beträgt der Durchmesser 6mm) und der an seiner Seitenwand Rastnasen 5.6, die mit Gegenrastelementen an der Innenseite des Filterhalter-Aufnahmeteils 4.3 zusammenwirken, und einen oberen Rand mit einem nach außen weisenden Außenflansch 5.7 aufweist. Ein im Filterhalter-Innenraum aufzunehmendes Kaffeebehältnis, beispielsweise einen Papierfilter 5.2, dessen oberer Rand nach außen umgebogen ist oder umgebogen wird und so auf den Außenflansch 5.7 umgeschlagen werden kann; ein Silikonring 5.3 mit einer zweifachen Umfangsnut, wobei in die obere Umfangsnut 5.3a (siehe Fig. 12) eine gelochten Filterplatte 5.4 aus Metall eingesetzt ist und wobei die untere Umfangsnut 5.3b den Außenflansch 5.7 des Filterhalters 5.1 sowie die darüber umgeschlagene Oberkante des Papierfilters 5.2 übergreift.

Die Filtereinheit 5 bildet eine Baueinheit, die das im Papierfilter 5.2 enthaltene Kaffeepulver 6 sicher umschließt. Der Papierfilter 5.2 hat beispielsweise eine Porengröße von etwa 15µm und der Lochdurchmesser der Filterplatte 5,4 liegt bei etwa 25µm. Die Filtereinheit 5 wird in das Filterhalter-Aufnahmeteil 4.3 eingesetzt, wobei die Rastnase 5.6 am Gegenrastmittel des Filterhalter-Aufnahmeteils 4.3 einrastet. Als letztes wird das Spritzschutzteil 4.1 auf das Auffangteil 4.2 so aufgesetzt, dass das Rastmittels 4.8a und das Gegenrastmittel 4.8b in Eingriff miteinander gelangen, so dass sich der kompakte Brüheinsatz 3 ergibt, wie er in den Figuren 2 und 3 gezeigt ist.

Die Filterplatte 5.4 ist in diesem Fall der Filtereinheit 5 zugeordnet und mit dieser lösbar verbunden. Sie besteht aus biegesteifem Werkstoff; im Ausführungsbeispiel aus Metall mit einem Lochdurchmesser von etwa 10µm, wobei geeignete Werkstoff-Alternativen Keramik oder Kunststoff sind. Andere ebenfalls geeignete Filterplatten bestehen aus biegsamem Werkstoff wie Textil und insbesondere aus Pappe oder Papier, wobei gegebenenfalls die Filterplatte aus dem biegsamen Werkstoff zwecks mechanischer Stabilisierung mit einer Träger- insbesondere einer Gitterstruktur unterlegt ist.

Bei alternativen Ausführungsformen des erfindungsgemäßen Brüheinsatzes ist der Filterhalter 5.1 selbst als Filter ausgebildet, wobei die Bodenlöcher 5.5 an seiner Unterseite einen Durchmesser aufweisen, der klein genug ist, um das Kaffeepulver 6 zurückzuhalten, also beispielsweise weniger als 0,5mm, bevorzugt weniger als 0,1mm und besonders bevorzugt weniger als 0,05mm (50µm), so dass das zusätzliche Kaffeebehältnis, beziehungsweise der Papierfilter 5.2 entfallen kann.

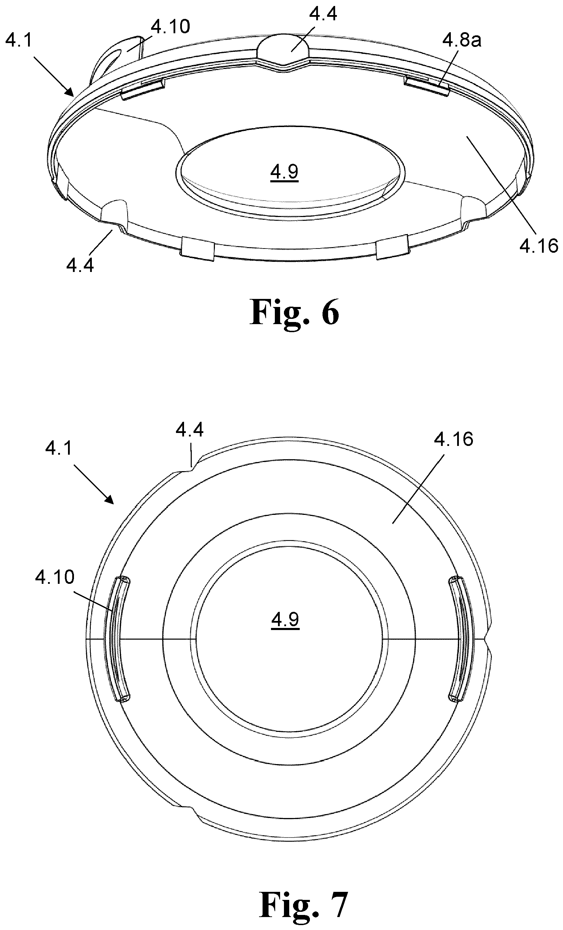

**Figur 6** zeigt eine dreidimensionale Darstellung des Spritzschutzteils 4.1, das eine mittige Entlüftungsöffnung 4.9 aufweist. Aus der Draufsicht auf das Spritzschutzteil 4.1 gemäß **Figur 7** sind die Entlüftungsöffnung 4.9 sowie die Haltegriffe 6, sowie die drei an der Außenwand umlaufenden Längsrillen 4.4 erkennbar.

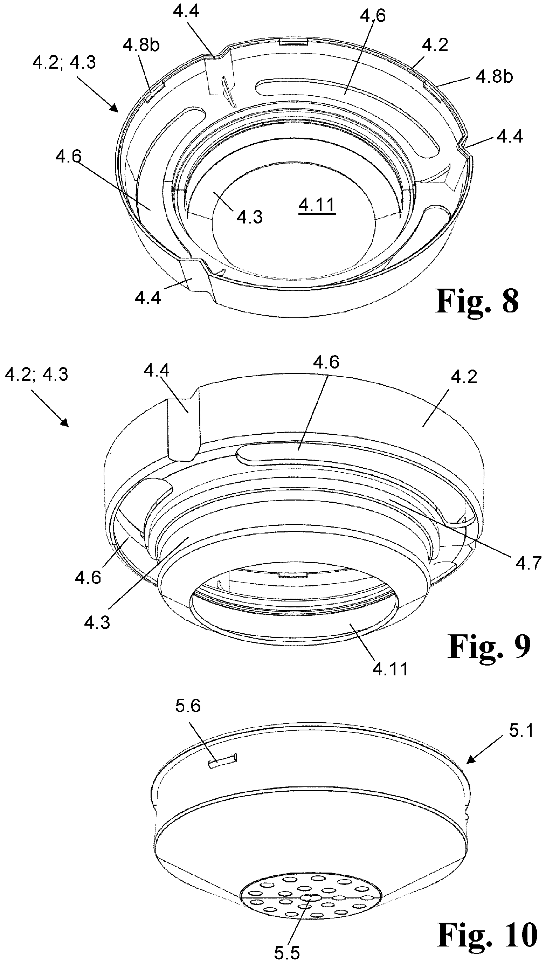

**Figur 8** und **Figur 9** zeigen in unterschiedlichen dreidimensionalen Ansichten jeweils das Auffangteil 4.2 im integralen Verbund mit dem Filterhalter-Aufnahmeteil 4.3. Die Längsrillen 4.4, die peripher verlaufenden Öffnungsschlitze 4.6 sowie die Gegenrastmittel 4.8b zur Fixierung des Spritzschutzteils 4.1 sind erkennbar.

**Figur 10** zeigt eine dreidimensionale Ansicht des Filterhalters 5.1. Dieser hat im Wesentlichen Trichterform und ist mit mehreren Rastnasen 5.6 an der Außenwand und mit Bodenlöcher 5.5 an seiner Unterseite versehen.

**Figur 11** und **Figur 12** zeigen in unterschiedlichen Darstellungen und Ansichten jeweils den Silikonring 5.3 und die Filterplatte 5.4. Die Filterplatte 5.4 schließt die Öffnung des trichterförmigen Filterhalters 5.1 nach oben hin ab. Die Filterplatte 5.4 besteht aus Edelstahl und weist eine Vielzahl feiner Bohrungen mit Durchmessern von etwa 25µm auf, die den Durchlass von Teilchen aus dem Kaffeepulver nach oben hin in das Filterhalter-Aufnahmeteil 4.3 oder in das Auffangteil 4.2 verhindern.

Die Filterplatte 5.4 wird in die obere Nut eines Silikonring 5.3 eingelegt, der an seiner Innenseite eine Doppelnut 5.3a und 5.3b aufweist. In die untere Nut 5.3b ragt der obere Rand des Filterhalters 5.1, der als nach außen ragender Außenflansch 5.7 ausgebildet ist. Dadurch wird die Filterplatte fest an dem trichterförmigen Filterhalter 5.1 fixiert. Die Filtereinheit 5 bildet insgesamt einen kompakten, einfach zu handhabenden, kapselförmigen Verbund, in dem das Kaffeepulver eingeschlossen ist.

**Figur 13** zeigt einen Messeraufsatz 8. Dieser wird optional auf den Messersatz 1.5 des Mixtopfes 1 aufgesetzt, um auch bei niedrigem Füllstand des Wasserbades 2.4 einen hinreichend ausgeprägten und hohen Wasserstrudel 2 zu erreichen. Der Messeraufsatz 8 hat einen Adapter 8.1 zur Fixierung auf der rotierenden Welle des Messersatzes 1.5, an den sich beiderseits zwei schaufelartig ausgeformte Gebilde 8.2 anschließen. Die schaufelartig ausgeformten Gebilde 8.2 haben im Vergleich zu üblichen Schlagmessern des Messersatzes 1.5 eine viel größere rotierende Fläche und können dadurch wesentlich höhere Kräfte auf das Wasserbad 2.4 ausüben. Die zur Ausbildung des Wasserstrudels erforderliche Rotationsgeschwindigkeit ist daher vergleichsweise niedrig was mit einem leiseren Lauf und einer Einsparung von Energie einhergeht.

Die in **Figur 14** schematisch und im Detailausschnitt dargestellte, multifunktionale Küchenmaschine 10 weist wie aus dem Stand der Technik bekannt, ein Basisgerät 10.1 auf, das eine Aufnahme 10.2 für den Mixtopf 1 bereitstellt, und das ein Bedienungstableau einschließlich einer Starttaste 10.3 und eines Displays 10.4 zum Überwachen und Einstellen von Rezepturen oder von Parametern einer thermo-mechanischen Behandlung von Nahrungsmitteln im Mixtopf 1 ermöglicht. Mittels eines Elektromotors (in der Figur nicht dargestellt) wird der Messersatz 1.5 angetrieben und mittels einer Heizeinrichtung (in der Figur nicht dargestellt) wird der Mixtopf 1 beheizt.

Die Topföffnung des Mixtopfes 1 ist von einem Deckel 1.3 abgedeckt, der mittels eines Verriegelungsmechanismus 10.5 auf dem Oberrand des Mixtopfes 1 fixierbar ist. Der Innendurchmesser des Mixtopf-Innenraums 1.4 verjüngt sich von oben nach unten und liegt im oberen, nicht verjüngten Bereich bei etwa 17cm. An der Mixtopf-Innenwand verlaufen von oben nach unten drei nach innen ragende Längsrippen 1.7. In den Mixtopf-Innenraum 1.4 ist der oben beschriebene Brüheinsatz 3 eingesetzt.

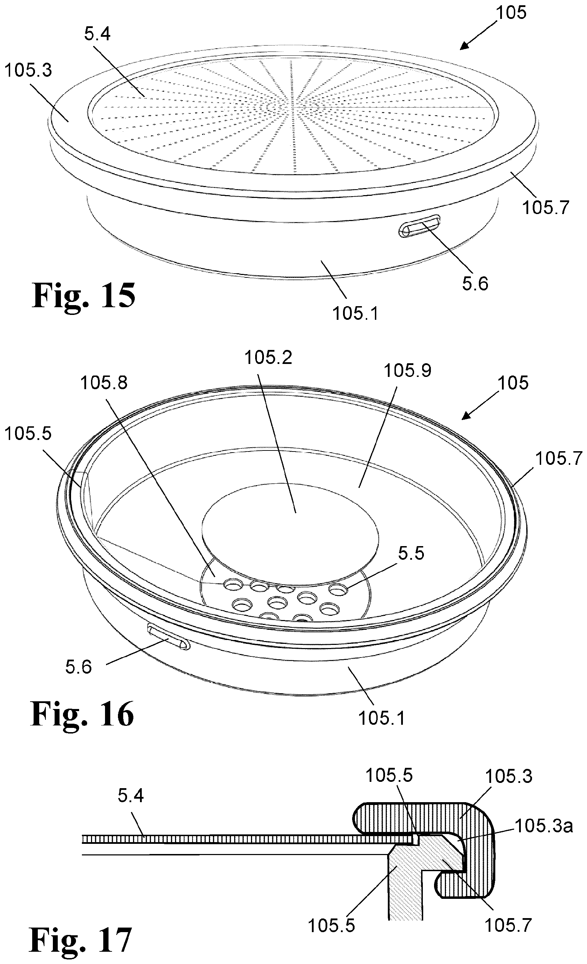

Nachfolgend wird der erfindungsgemäße Brüheinsatz 3 anhand weiterer Ausführungsformen näher erläutert. Sofern in den Figuren 15 bis 28 die gleichen Bezugsziffern wie in den vorherigen Figuren 1 bis 14 verwendet sind, so stehen diese für identische oder äquivalente Bauteile oder Bestandteile.

Die in **Figur 15, Figur 16** und **Figur 17** gezeigte Ausführungsform der Filtereinheit 105 unterscheidet sich von der oben beschriebenen Filtereinheit 5 im Wesentlichen durch eine flachere Bauform sowie durch die Art und Weise der Halterung und Form der eingesetzten Filter.

Die Filtereinheit 105 umfasst einen im Wesentlichen zylinderförmigen Filterhalter 105.1 aus Kunststoff, der einen flachen Lochbodenbereich 105.8 mit 20 Bodenlöchern 5.5 aufweist, an den sich ein leicht nach oben geneigter Bodenbereich 105.9 anschließt. Der Durchmesser des flachen Lochbodenbereichs 105.8 beträgt 48mm, wobei die Bodenlöcher 5.5 innerhalb eines Hüllkreises mit einem Durchmesser von 35mm verlaufen. Die Bodenlöcher 5.5 haben einen runden Querschnitt und ihr Durchmesser beträgt 5mm. Die Summe der Querschnittsflächen der Bodenlöcher (Gesamt-Lochquerschnittsfläche) liegt bei 345 mm². Auf den flachen Lochbodenbereich 105.8 wird ein Rundfilter 105.2 aus Papier aufgelegt, dessen Durchmesser 47mm beträgt. An der Seitenwand sind Rastnasen 5.6 vorgesehen, die mit Gegenrestelementen an der Innenseite des Filterhalter-Aufnahmeteil 4.3 zusammenwirken.

Der obere Rand des Filterhalters 105.1 ist mit einem nach außen weisenden Außenflansch 105.7 versehen, der eine innen umlaufende Stufe 105.5 aufweist. Die Stufe 105.5 dient als Aufnahme für die gelochte obere Filterplatte 5.4. Die Stufenhöhe und die Dicke der oberen Filterplatte 5.4 sind identisch. Mittels eines Silikonrings 105.3 mit Innennut 105.3a wird die gelochte Filterplatte 5.4 auf dem Außenflansch 105.7 fixiert, wie dies in Figur 17 gezeigt ist. Dabei untergreift der Silikonring 105.3 den Flansch 105.7 und presst gleichzeitig die gelochte Filterplatte 5.4 auf den Außenflansch 105.7. Die Filtereinheit 105 bildet somit ebenfalls eine Baueinheit, die das auf den Rundfilter 105.2 aufgebrachte Kaffeepulver 6 sicher umschließt.

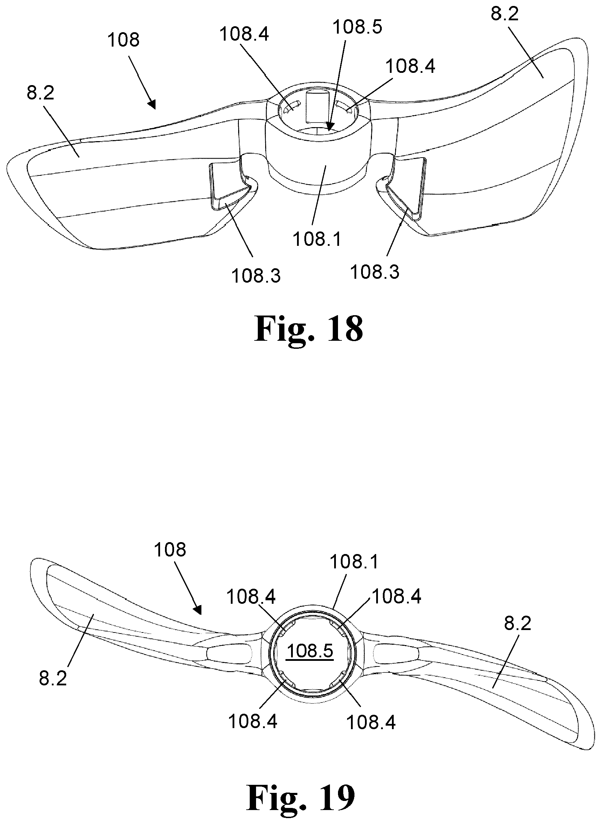

**Figur 18** und **Figur 19** zeigen einen Messeraufsatz 108 zum optionalen Verstärken des Wasserstrudels 2. Dazu wird der Aufsatz 108 mit dem Messersatz 1.5 des Mixtopfes 1 verbunden. Der Messeraufsatz 108 hat einen Adapter 108.1, der eine Zentralbohrung 108.5 aufweist, und er auf das obere Ende der Antriebswelle des Messersatzes 1.5 aufgesetzt wird. An den Adapter 108.1 schließen sich beiderseits zwei schaufelartig ausgeformte Gebilde 8.2 an, die im Vergleich zu üblichen Schlagmessern des Messersatzes 1.5 eine viel größere rotierende Fläche haben und dadurch wesentlich höhere Kräfte auf das Wasserbad 2.4 ausüben können.

Zur Fixierung am Messersatz 1.5 ist an der Unterseite der schaufelartig ausgeformten Gebilde 8.2 jeweils ein Hakenelement 108.3 ausgeformt, das jeweils eines der Messer des Messersatzes 1.5 untergreift. Außerdem sind um die Innenseite der Zentralbohrung 108.5 vier walzenförmige Rastnasen 108.4 verteilt, die in eine umlaufende Nut der Antriebswelle einrasten.

Nachfolgend wird das Verfahren zur Herstellung eines Heißgetränks anhand der in den Figuren 1 bis 14 gezeigten Ausführungsform des Brüheinsatzes beispielhaft erläutert:

### Beispiel 1

Im Mixtopf 1 werden etwa 65g Kaffeebohnen mit Hilfe des Messersatzes 1.5 zermahlen und das Kaffeepulver 6 wird entnommen. In den Mixtopf 1 wird etwa 1 Liter frisches Wasser eingefüllt. Der Füllstand des Wasserbades 2.4 liegt knapp unterhalb der Höhenebene H_{B}. Das Wasserbad 2.4 wird auf 100°C erhitzt und bei dieser Temperatur gehalten.

Währenddessen wird das Kaffeepulver 6 in den tütenartigen Papierfilter 5.2 eingefüllt. Der Papierfilter 5.2 ist an die Innenabmessungen des Filterhalters 5.1 angepasst. Nach dem Einsetzen in den Filterhalter 5.1 wird der freie obere Rand des Papierfilters 5.2 nach außen umgeschlagen, so dass er auf dem Außenflansch 5.7 des Filterhalters 5.1 aufliegt. Dem Außenflansch 5.7 mitsamt dem übergezogenen Papierfilter 5.2 wird anschließend der Silikonring 5.3 übergestülpt. In die obere umlaufende Ringnut 5.3a ist die Edelstahl-Filterplatte 5.4 bereits eingesetzt. Der Außenflansch 5.7 und der umgebogene Papierfilterrand ragen nun in die untere umlaufende Ringnut 5.3b hinein. Nach dem Aufsetzen des Silikonrings 5.3 wird somit eine kompakte, kapselförmige Filtereinheit 5 erhalten, innerhalb der das Kaffeepulver 6 eingeschlossen ist. Sie ist seitlich von Kunststoffmaterial umgeben, wobei die oberen und unteren Öffnungen von Filtermaterial begrenzt sind, das für heißes Wasser durchlässig und für das eingeschlossene Kaffeepulver 6 undurchlässig ist.

Die kapselförmige Filtereinheit 5 wird anschließend in das Filterhalter-Aufnahmeteil 4.3 eingesetzt, dessen Innenkontur an die Außenkontur der Filtereinheit 5 angepasst ist. Dabei gewährleistet der Formschluss der Rastnasen 5.6 mit den entsprechenden Gegenstücken an der Innenwandung des Filterhalter-Aufnahmeteils 4.3 eine reproduzierbare Höhenfixierung. Insbesondere weist die kapselförmige Filtereinheit 5 einen Außenkonus auf, dessen Neigungswinkel dem des Innenkonus 4.14 entspricht, wobei die Filtereinheit 5 die Höhenebene H_{A} nach oben nicht überragt, sondern vorzugsweise wenige Millimeter unterhalb davon in der Höhenebene H_{F} endet, in der auch die Ausbeulung 4.7 für den Silikonring 4.7 endet. Der Boden des trichterförmigen Filterhalters 5.1 mit Bodenlöcher 5.5 ragt wenige Millimeter aus der zentralen Öffnung 4.11 heraus und endet in der Höhenebene H_{B}.

Anschließend wird auf die integrale Einheit aus Filterhalter-Aufnahmeteil 4.3 und Auffangteil 4.2 das Spritzschutzteil 4.1 aufgeklippst. Dabei gelangen die Rastmittel 4.8a und 4.8b unter Ausbildung eines Formschusses gegenseitig in Eingriff, so dass ein kapselförmiges Basiselement 4 erhalten wird, das die Filtereinheit 5 umschließt. Das Basiselement 4 und die Filtereinheit bilden den Brüheinsatz 3.

Der so erhaltene Brüheinsatz 3 wird in den Mixtopf 1 eingesetzt, wobei die beiden Haltegriffe 4.10 zur einfacheren Ausrichtung benutzt werden können. Dabei legt sich die konische Seitenwand 4.12 (Außenkonus) an die konische Innenwand 1.2 (Innenkonus) des Mixtopfes 1 an. Der Konuswinkel und der Durchmesser der konischen Seitenwand 4.12 sind so gewählt, dass das Basiselement 4 und damit auch seine peripher verlaufenden Öffnungsschlitze 4.6 in einer vorgegebenen Höhenebene H_{A} an der Mixtopf-Innenwand 1.2 anliegen und sich der Brüheinsatz 3 vollständig oberhalb der Höhenebene H_{B} erstreckt. Der Mixtopf-Deckel 1.3 wird aufgesetzt, so dass sich die Deckelunterseite in der Höhenebene H_{D} befindet, in der auch die Haltegriffe 10.4 enden (die Höhenebenen H_{G} und H_{D} sind identisch).

Anschließend wird der Messersatz 1.5 mit einer Rotationsgeschwindigkeit rotiert, die auf das heiße Wasserbad 2.4 eine Zentrifugalkraft ausübt, die genügt, um einen Strudel 2 zu erzeugen, der an der Mixtopf-Innenwand 1.2 eine Höhe erreicht, die oberhalb der Höhenebene H_{A} liegt. Dadurch tritt Wasser aus dem Wasserstrudel 2 durch die peripher verlaufenden Öffnungsschlitze 4.6 in das Basiselement 4 ein, wie diese die Richtungspfeile 2.1 in Figur 1 andeuten. Das Spritzschutzteil 4.1 verhindert, dass Spritzer des heißen Wassers aus dem Brüheinsatz 3 heraustreten. Der Durchmesser der Öffnung 4.9 des Spritzschutzteils 4.1 beträgt im Ausführungsbeispiel 6cm. Er kann alternativ dazu aber auch kleiner gewählt werden; beispielsweise weniger als 5cm, um einen Wasseraustritt sicher zu verhindern. Dazu tragt auch der nach unten umgebogene Rand der Öffnung 4.9 bei.

Die aufgrund der Zentrifugalkraft in das Basiselement 4 eingeschwemmte Flüssigkeits-Teilmenge aus dem Wasserstrudel 2 wird in der Figur 1 durch die Bezugsziffer 2.2 repräsentiert. Sie wird in Richtung auf die Längsachse 1.6 umgelenkt und fließt auf einer geneigten Fläche 4.15 innerhalb des Basiselements 4 zum Filterträger-Aufnahmeteil 4.3 und der darin eingesetzten, kapselförmigen Filtereinheit 5. Die Flüssigkeits-Teilmenge 2.2, die dabei eine Temperatur von etwas weniger als 100°C hat, durchdringt die Edelstahl-Filterplatte 5.4 und gelangt auf die in der Filtereinheit 5 eingeschlossene Kaffeepulver-Portion 6, die sie von oben nach unten infolge der Schwerkraft durchdringt, und dabei Extrakte aus dem Kaffeepulver 6 aufnimmt. Die mittels Silikonring 5.3 fest auf dem Filterhalter 5.1 montierte Filterplatte 5.4 verhindert ein Ausschwemmen des Kaffeepulvers 6 nach oben.

Der mit Extrakten aus dem Kaffeepulver 6 angereicherte und aus dem Brüheinsatz 3 abtropfende Kaffeestrom wird in der Figur 1 durch die Bezugsziffer 2.3 repräsentiert. Er tritt aus dem Papierfilter 5.2 und den Bodenlöcher 5.5 des Filterhalters 5.1 in einen Abtropfraum (Leerraum 1.8) oberhalb des Wasserstrudels 2 aus. Der Leerraum 1.8 ist ein Teil des Mixtopf-Innenraums 1.4 und entsteht deswegen, weil der Wasserstrudel 2 einen unteren Scheitelpunkt in einer Höhenebene Hs ausbildet, die unterhalb der Höhenebene H_{B} liegt, also unterhalb des Brüheinsatzes 3. Der mit Extrakten angereicherte Kaffeestrom 2.3 vermischt sich mit dem heißen Wasser des Wasserstrudels 2, wovon wieder eine Teilmenge 2.2 abgezweigt und weiter mit Kaffeeextrakten angereichert wird. Infolge dieses iterativen Brühprozesses wird die Flüssigkeit innerhalb des Mixtopf-Innenraums kontinuierlich mit Kaffeeextrakten angereichert und dadurch zu einem Kaffeegetränk. Der iterative Brühprozess wird beendet, sobald das Kaffeegetränk die gewünschte Qualität beziehungsweise Stärke erreicht hat. Dies ist beispielsweise nach etwa 12 Minuten der Fall.

### Beispiel 2

Bei einer anderen Verfahrensvariante wird in den Mixtopf 1 etwa 1 Liter frisches Wasser eingefüllt. Die mit dem Kaffeepulver 6 bestückte Filtereinheit 5 wird in das Basiselement 4 und bildet den Brüheinsatz 3, der in den Mixtopf 1 der Küchenmaschine 10 eingesetzt wird. Die minimale Höhenebene H_{B} des Brüheinsatzes 3 liegt dabei an der Wasseroberfläche oder sogar knapp darunter. Daraufhin wird der Deckel 1.3 aufgesetzt und die Küchenmaschine 10 wird eingeschaltet. Der Messersatz 1.5 wird mit einer Rotationsgeschwindigkeit rotiert, die genügt, dass sich ein Wasserstrudel ausbildet, dessen unterer Scheitelpunkt unterhalb der minimalen Höhenebene H_{B} liegt. Der dabei erzeugte Wasserstrudel hat ein Maximum, das unterhalb der Höhenebene H_{A} liegt, so dass kein Teilstrom in Richtung des Filterelements 5 abgezweigt wird.

Gleichzeitig oder anschließend wird das Wasserbad 2 auf die Soll-Temperatur von beispielsweise 98°C oder 100°C aufgeheizt und bei dieser Temperatur gehalten. Nachdem die Soll-Temperatur erreicht ist, wird die Rotationsgeschwindigkeit des Messersatzes 1.5 soweit erhöht, dass sich der Wasserstrudel 2 mit der oben bei Beispiel 1 erläuterten Stärke und Form ausbildet. Erst dann wird ein Teilstrom daraus abgezweigt, so dass flüssiges, heißes Wasser in Kontakt mit dem Kaffeepulver 6 kommt, und der iterative Brühprozess startet.

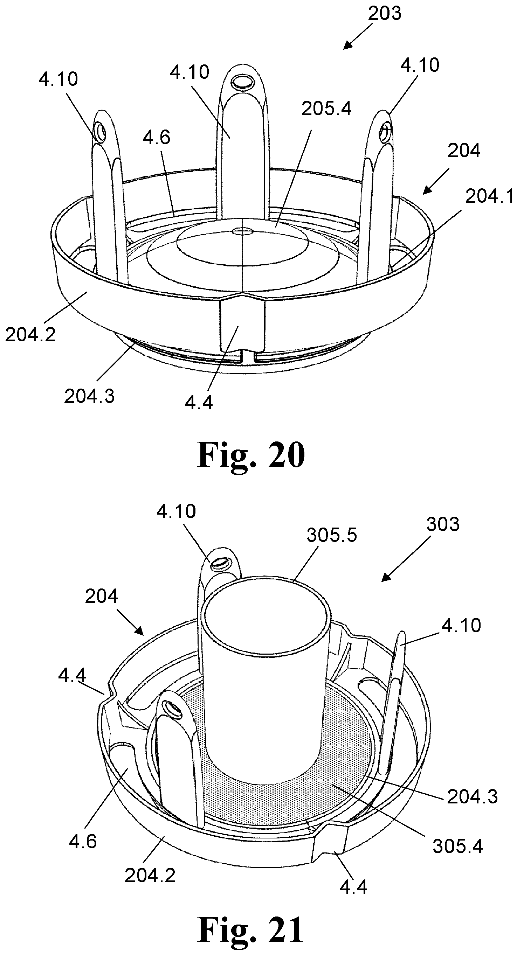

Die Figuren 20 bis 23 zeigen weitere bevorzugte Ausführungsformen eines Brüheinsatzes gemäß der Erfindung. Sofern dieselben Bezugsziffern wie in den vorherigen Figuren verwendet sind, so sind damit baugleiche oder äquivalente Bauteile und Bestandteile bezeichnet, wie sie oben anhand der Beschreibung der anderen Ausführungsformen des Brüheinsatzes näher erläutert sind.

Der in **Figur 20** gezeigte Brüheinsatz 203 umfasst ein Ableitelement 204 mit einem Auffangteil 204.2, einem Filterhaltering 204.3 und Haltegriffen 4.10. Die Haltegriffe 4.10 stehen vom Auffangteil 204.2 senkrecht nach oben ab. Beim Einsatz des Brüheinsatzes 203 im Mixtopf 1 (Figur 1) enden sie in der Höhenebene H_{G}. Die genannten Bauteile des Ableitelements 204 (Auffangteil 204.2, Filterhaltering 204.3, Haltegriffe 4.10) bilden ein einstückiges Spritzgussteil.

Im Unterschied zum Brüheinsatz 3 (Figur 2) hat der Brüheinsatz 203 kein Spritzschutzteil; das Auffangteil 204.2 ist also nach oben offen.

Weiterhin umfasst der Brüheinsatz 203 eine (in der Figur nicht dargestellte) Filtereinheit zur Aufnahme des Kaffeepulvers. Diese wird am Filterhaltering 204.3 des Auffangteils 204.2 von unten lösbar montiert.

Der aus dem Wasserstrudel über die Öffnungsschlitze 4.6 abgeleitete Teilstrom gelangt durch eine zentrale Öffnung des Spritzgussteils 204, die von einer nach oben gewölbten, Filterplatte 205.4 aus Edelstahl verschlossen ist, in die Filtereinheit. Die Filterplatte 205.4 ist mit der Boden-Oberseite 204.1 des Ableitelements 204 verbunden, beispielsweise durch Formschluss oder durch Stoffschluss. Die Filterporen der Filterplatte sind in der Figur nicht dargestellt; sie haben eine Porenweite von 0,5mm und einen Mittenabstand von 0,8mm und sie sind auch in der kuppelförmigen Aufwölbung der Filterplatte 205.4 vorhanden. Dies trägt zu einer kontinuierlichen Durchströmung der Filtereinheit und des darin enthaltenen Kaffeepulvers bei. Dies kann darauf zurückgeführt werden, dass die Aufwölbung der Filterplatte 205.4 der Bildung eines geschlossenen Flüssigkeitsfilms auf der Filterplatte 205.4 entgegenwirkt, der wiederum zu einem stockenden, ungleichmäßigen Abfließen der Flüssigkeit durch die Poren der Filterplatte 205.4 infolge von Kapillar- oder Druckkräften führen kann. Die Aufwölbung ist so hoch, dass sie nicht permanent vom Flüssigkeitsfilm überspült werden kann. Ausgehend von einem üblichen Flüssigkeitsfilm mit einer Höhe von etwa 1cm, genügt dafür eine Kuppelhöhe von beispielsweise 3cm vollkommen; sie kann auch kleiner sein. Die Filterporen im Bereich der Aufwölbung gewährleisten eine Belüftung beziehungsweise eine Entlüftung des Innenraums der Filtereinheit.

Der mit Extrakten der Aufgusssubstanz angereicherte Flüssigkeitsstrom tritt durch mehrere Bodenöffnungen 5.5 (Figur 10) der Filtereinheit aus.

Die Aufwölbung der Filterplatte 205.4 dient somit als Störstelle für die Ausbildung eines geschlossenen Flüssigkeitsfilms auf der Filterplatte 205.4 und sie gewährleistet, dass der Innenraum der Filtereinheit belüftet wird. Die Geometrie und Position dieser Störstelle ist an und für sich beliebig.

Bei der in **Figur 21** gezeigten Ausführungsform des erfindungsgemäßen Brüheinsatzes 303 entspricht die Ausgestaltung des Ableitelements 204, bestehend aus Auffangteil 204.2, Filterhaltering 204.3 und Haltegriffen 4.10 derjenigen von Figur 20. Auch hier wird eine kapselförmige Filtereinheit zur Aufnahme des Kaffeepulvers an einem Filterhaltering 204.3 des Auffangteils 204.2 angesetzt.

Im Unterschied zum Ableitelement 204 (Figur 20) ist das Ableitelement 304 nach oben von einem ringförmigen Filter 305.4 aus Edelstahl abgeschlossen, dessen Innenrand an einen senkrecht nach oben ragenden Hohlzylinder 305.5 angrenzt. Die in der Figur nicht gezeigten Filterporen haben eine Porenweite von 0,5mm und einen Mittenabstand von 0,8mm. Der Hohlzylinder 305.5 hat einen Innendurch-messer von 50mm und eine Höhe, die die derjenigen der Haltegriffe 4.10 entspricht. Der Hohlzylinder 305.5 und die Haltegriffe 4.10 enden in der Höhenebene H_{G} und liegen demnach beim bestimmungsgemäßen Einsatz des Brüheinsatzes 303 an der Unterseite des aufgesetzten Deckels 1.3 (Figur 1) leicht an.

Durch die Bohrung des nach oben und unten offenen Hohlzylinders 305.5 wird der Innenraum der Filtereinheit permanent belüftet. Insoweit hat der Hohlzylinder 305.5 hinsichtlich der kontinuierlichen Durchströmung der Filtereinheit und des darin enthaltenen Kaffeepulvers eine ähnliche Wirkung wie die nach oben gewölbte Filterplatte 205.4 bei der Ausführungsform von Figur 20. Er wirkt der Ausbildung eines geschlossenen Flüssigkeitsfilms, der die Filtereinheit nach oben abschließt entgegen und verhindert so ein stockendes, ungleichmäßiges Abfließen der Flüssigkeit durch die Poren des ringförmigen Filters 305.4.

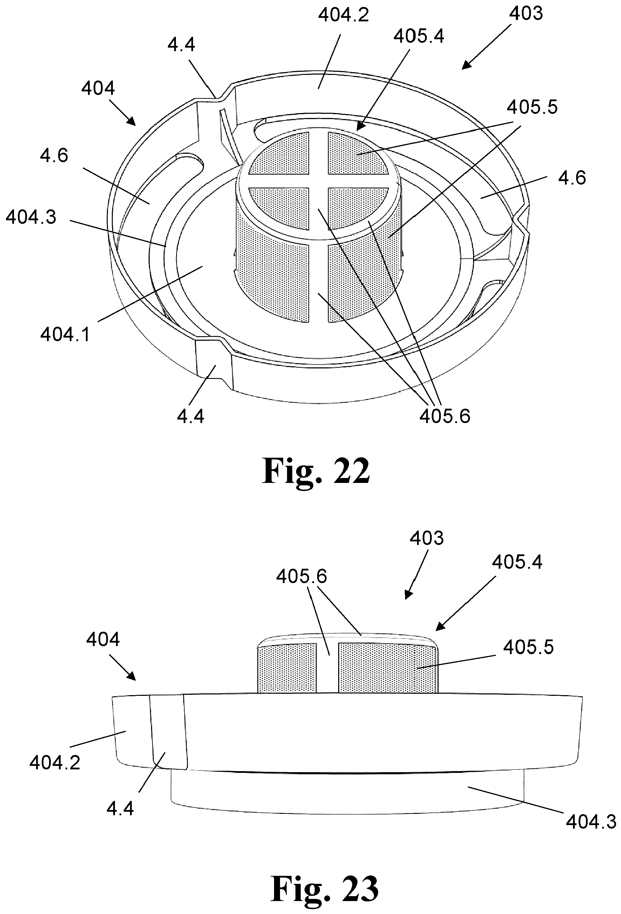

Auch der in den **Figuren 22 und 23** gezeigte Brüheinsatz 403 zum Einsatz in einem im Mixtopf 1 (Figur 1) hat kein Spritzschutzteil und ist nach oben offen. Er umfasst ein durch Spritzguss in einem Stück gefertigtes Ableitelement 404, das sich aus einem Auffangteil 404.2 und einem Boden 404.1 zusammen. Der Boden 404.1 hat ein Gefälle von außen nach innen und ein Teil des Bodens 401.1 bildet die Oberseite eines Filterhalterings 404.3, an dem eine separate (in der Figur nicht gezeigte) Filtereinheit zur Aufnahme von Kaffeepulver von unten lösbar angesetzt ist.

Der Boden 404.1 hat eine zentrale Öffnung, die in die Filtereinheit mündet und die nach oben hin von einer Filterkappe 405.4 abgeschlossen (und daher in der Figur 22 verdeckt) ist. Die Filterkappe 405.4 hat die Form eines umgestülpten, im Wesentlichen zylinderförmigen Bechers, wobei der "Becherrand" mit dem des Ableitelement-Boden 404.1 verbunden ist. Diese Verbindung ist im Ausführungsbeispiel stoffschlüssig; sie wird beispielsweise durch Umspritzen eines becherförmigen Einlegeteils bei der Herstellung des Ableitelements 404 im Spritzgussverfahren erzeugt. Alternativ dazu ist die Filterkappe 405.4 mit dem Boden 404.1 des Ableitelements 404 durch Formschluss verbunden.

Die Filterkappe 405.4 hat mehrere flüssigkeitsdurchlässige Filterbereiche, die mit einem textilen Flächengebilde belegt sind. Im Ausführungsbeispiel ist das textile Flächengebilde als flexibles Edelstahlgewebe 405.5 aus Drähten mit einem Drahtdurchmesser von 120 µm ausgeführt. Die Porengröße des Edelstahlgewebes 405.5 wird üblicherweise als Siebmaschenweite in der Einheit "mesh" angegeben, wobei das Edelstahlgewebe 405.5 eine Siebmaschenweite von 80 mesh aufweist, was etwa einer Porengröße von 180 µm entspricht. Das Edelstahlgewebe 405.5 ist fixiert auf einem Stützgerüst 405.6 aus Edelstahlblechstreifen, die die Becherform vorgeben.

Vier der mit Edelstahlgewebe 405.5 belegten Filterbereiche befinden sich an der Mantelfläche und weitere vier Filterbereiche befinden sich am nach oben weisenden "Becher-Boden". Die Filterkappe 405.4 hat eine Höhe von 30mm. Sie wirkt - ähnlich wie die Aufwölbung der Filterplatte 205.4 gemäß Figur 20 - der Bildung eines geschlossenen Flüssigkeitsfilms oberhalb der Filtereinheit entgegen. Insbesondere sorgen die vier Filterbereiche am nach oben weisenden "Becher-Boden" auch dann noch eine Entlüftung des Innenraums der Filtereinheit, wenn die Flüssigkeit an der Filterkappen-Seitenwand bis oben hin anstehen sollte. Die Filterporen sind trotz ihrer vergleichsweise geringen Größe für die vom Ableitelement 404 zugeführte Flüssigkeit (Wasser) leicht durchlässig und sie verhindern zuverlässig, dass nach oben aufschwimmende Partikel des Aufgusssubstanz auf die Oberseite des Ableitelements 404 gelangen. Die Filterkappe 405 ist in diesem Fall dem Ableitelement 404 zugeordnet und mit diesem fest verbunden.

Bei einer anderen Ausführungsform sind die mit Edelstahlgewebe 405.5 belegten Filterbereiche am Becherboden teilweise oder vollständig ersetzt durch mindestens eine Bohrung oder durch eine nach oben offene Stirnseite der Filterkappe 204.

Wegen ihrer einfachen Fertigung ist die Zylinderform der Filterkappe 204 bevorzugt. Bei anderen Ausführungsform kann die Filterkappe 405.4 eine von der Zylinderform abweichende Form haben und ist beispielsweise kegelförmig, kegelstumpfförmig, pyramidenförmig oder pyramidenstumpfförmig ausgeführt.

Wie oben bereits ausgeführt, befindet sich das aufzubrühende Kaffeepulver in der Filtereinheit, die von unten an den Boden 404.1 des Ableitelements 404 lösbar angesetzt ist.

Das Kaffeepulver liegt dabei auf einem weiteren Filter auf, wie er beispielsweise anhand der Ausführungsformen gemäß den Figuren 1 bis 14 sowie der Figuren 15 und 16 beschrieben ist. Das gesamte Filterelement umfasst somit mindestens einen oberen Filter (der das Ausschwemmen von Kaffeepulverteilchen nach oben verhindert) und mindestens einen unteren Filter (der das Ausschwemmen von Kaffeepulverteilchen nach unten verhindert). Damit das Kaffeepulver ausreichend durchfeuchtet wird, ist es vorteilhaft, wenn mindestens so viel Wasser durch die Filterporen des oberen Filters eintritt, wie aus dem unteren Filter wieder austritt. Dies wird beispielsweise erreicht, wenn der Gesamt-Öffnungsquerschnitt der Filterporen des oberen Filters mindestens so groß ist wie der Gesamt-Öffnungsquerschnitt der Poren des unteren Filters. Er kann auch kleiner sein, da der Durchtritt des Wassers durch den untern Filter durch das darauf aufliegende Kaffeepulver behindert wird.

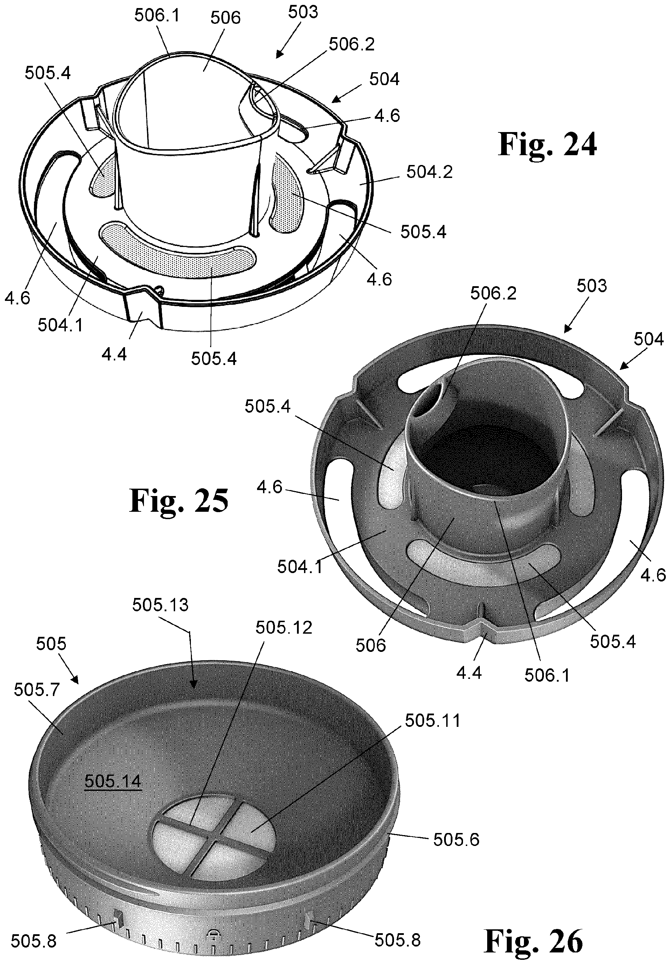

Auch der in den **Figuren 24 bis 28** gezeigte Brüheinsatz 503 zum Einsatz in einem im Mixtopf 1 (Figur 1) hat kein Spritzschutzteil und ist nach oben offen. In den **Figuren 24 und 25** ist das durch Spritzguss in einem Stück gefertigte Ableitelement 504 dargestellt. Dieses setzt sich aus einem Auffangteil 504.2 und einem Boden 504.1 zusammen. Vom Boden 504.1 steht ein beidseitig offener Hohlzylinder 506 mit einem Innendurchmesser von 70mm senkrecht nach oben ab. Die Unterseite des Hohlzylinders 506 ist mit dem Boden 504.1 fest verbunden und von Filterplättchen 505.4 umgeben, die in den Boden 504.1 eingelassen sind. Die Filterplättchen 505.4 bilden um den Hohlzylinder 506 drei gleichmäßig verteilte Kreisbögen mit einer Breite von 12mm, deren Bogenlänge durch einen Mittelpunktswinkel α von etwa 100 Grad definiert ist. Die Filterplättchen 505.4 bestehen jeweils aus Edelstahlgewebe mit einer Porengröße, die durch eine Siebmaschenweite von 120 mesh gekennzeichnet ist, was etwa einer Porengröße von 125 µm entspricht. Die Edelstahlgewebe (505.4) werden bei der Herstellung des Ableitelements 504 durch Spritzgießen in den Boden 504.1 eingespritzt und sind demnach integral und unlösbar mit diesem verbunden. Die drei Filterplättchen 505.4 sind in diesem Fall dem Ableitelement 504 zugeordnet und mit diesem fest verbunden. Sie schließen die Einfüllöffnung 505.13 (Figur 26) des Brühraums 505.14 teilweise ab und ermöglichen dem Heißwasser den Zutritt zum aufzubrühenden Kaffeepulver, das sich im Brühraum 505.14 der Filtereinheit 505 befindet und sie verhindern gleichzeitig ein Ausschwemmen von Kaffeepulver nach oben.

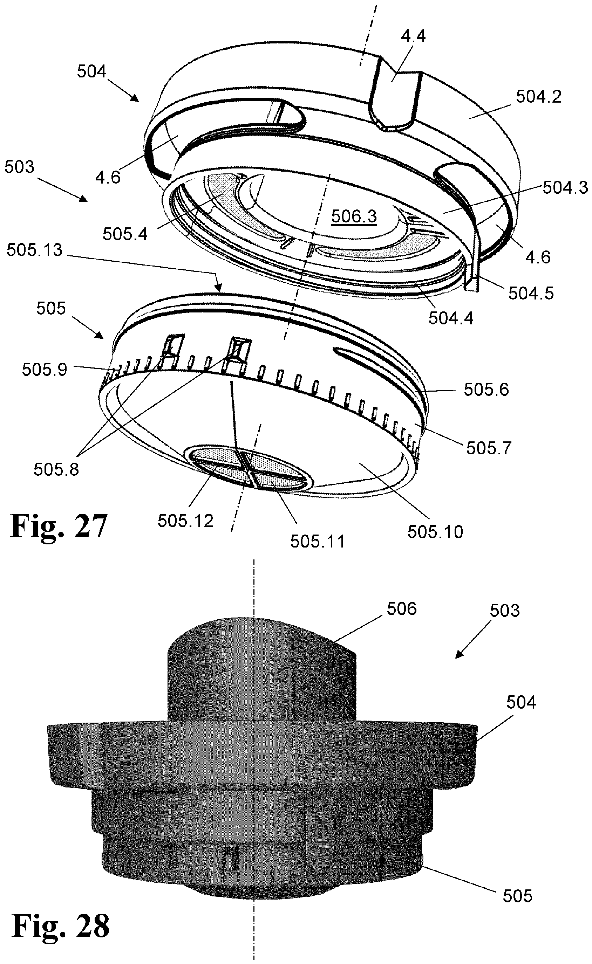

Das offene untere Ende 506.3 (Figur 27) des Hohlzylinders 506 mündet in die Einfüllöffnung 505.13 der Filtereinheit 505 (Figur 26). Der Hohlzylinder 506 dient zur Belüftung des Innenraums der Filtereinheit 505 (des Brühraums 505.14) im Betrieb. Das obere offene Ende 506.1 des Hohlzylinders 506 ist nicht gerade, sondern gewellt ausgeführt. An den beiden sich gegenüberliegenden Wellenbergen hat der Hohlzylinder 506 eine Höhe von 60mm. Die wellige Ausbildung des oberen Endes 506.1 dient ebenfalls der Belüftung. Denn bei aufgesetztem Deckel des Zubereitungs-Gefäßes liegen die Wellenberge an der Unterseite des Deckels an, was zu einer zusätzlichen Lagestabilisierung des Brüheinsatzes 503 führt. Die beiden sich gegenüberliegenden Wellentäler sind von der Deckelunterseite beabstandet und gewährleisten dadurch die Belüftung.

In Bereich eines der beiden Wellentäler ist an der Hohlzylinder-Innenwand eine gebogene Lasche 506.2 eingespritzt. Diese dient zur Entnahme des Brüheinsatzes 503 von oben mittels eines daran einzuhakenden Entnahmeteils, beispielsweise eines Spatels.

**Figur 26** zeigt eine Ansicht von oben durch die Einfüllöffnung 505.13 in den Brühraum 505.14 der Filtereinheit 505. Weitere Details der Filtereinheit 505 ergeben sich aus der nachfolgenden Beschreibung im Zusammenhang mit Figur 27.

Aus der Explosionsdarstellung von **Figur 27** ist die Unterseite des Ableitelements 504 zu erkennen. Diese umfasst einen Filterhaltering 504.3 mit Innengewinde 504.4 und einer Rastnase 504.5. Wie oben bereits ausgeführt, befindet sich das aufzubrühende Kaffeepulver im Brühraum 505.14 (Figur 26) der Filtereinheit 505, die von unten in den Filterhaltering 504.3 eingeschraubt wird. Die Wandung 505.7 der Filtereinheit 505, die die Einfüllöffnung 505.13 umgibt verfügt hierzu über ein Außengewinde 505.6, das mit dem Innengewinde 504.4 korrespondiert.. An der Wandung 505.7 sind zwei Rastelemente 505.8 angebracht, die mit der Rastnase 504.5 des Ableitelements 504 unter Bildung einer Rastverbindung beim Anschrauben der Filtereinheit 505 an das Ableitelement 504 zusammenwirken. Beim Überwinden des hinteren Rastelements 505.8 wird gleichzeitig ein im Ableitelement 504 eingelegter (in der Figur nicht gezeigter) Silikon-Dichtring zusammengepresst. Das vordere Rastelement dient als zusätzliche Sicherung gegen ein ungewolltes Aufdrehen der Gewindeverbindung im Betrieb. Weiterhin ist im unteren Bereich der Wandung 505.7 eine Riffelung 505.9 angebracht, die das Eindrehen der Filtereinheit 505 auch mit nassen Händen erleichtert.

Der sich nach unten leicht konisch verengende Boden 505.10 hat eine zentrale Bodenöffnung, in die ein Rundfilter 505.11 eingesetzt ist. Der Rundfilter 505.11 hat einen Durchmesser von 46mm und besteht ebenfalls aus einem Edelstahlgewebe mit einer Porengröße, die durch eine Siebmaschenweite von 120 mesh gekennzeichnet ist. Um einer Verformung im Lauf der Zeit entgegenzuwirken, liegen an der Oberseite und an der Unterseite des Rundfilters 505.11 Stützgitter 505.12 an. Die Filtereinheit 505 wird im Spritzgießverfahren gefertigt, in dem auch der Rundfilter 505.11 und die beiden Stützgitter 505.12 eingefügt werden. Anstelle eines Filter mit runder Form können auch andere Formen eingesetzt werden, und der Rundfilter kann beispielsweise auch durch vier Einzelfilter ersetzt werden, von denen jeder einen Kreissektor mit 90 Grad bildet.

**Figur 28** zeigt den Brüheinsatz 503 nach dem Zusammenbau von Ableitelement 504 und Filtereinheit 505.

Abgesehen von Dichtungs- und Filterteilen bestehen die Kunststoffteile der oben beschriebenen Brüheinsätze aus talkgefülltem Polypropylen (Bezeichnung PP-T20). Dieser Kunststoff zeichnet sich durch hohe mechanische Festigkeit, Wärmeformbeständigkeit und chemische Beständigkeit aus.

## Patentansprüche

1. Vorrichtung zur Zubereitung eines Heißgetränks, umfassend:
(1) eine Heizeinrichtung (1.9), die zum Erhitzen einer Flüssigkeit ausgelegt ist,
(2) ein Zubereitungs-Gefäß (1), das mit einer Aufnahme für ein Sammelbad (2.4) aus der heißen Flüssigkeit und mit einem um eine vertikale Rotationsachse (1.6) rotierbaren Rotationselement (1.5) ausgestattet ist, das zum Erzeugen eines Flüssigkeitsstrudels (2) aus der heißen Flüssigkeit in dem Sammelbad (2.4) geeignet ist,
(3) einen Brüheinsatz (3) zum Einsetzen in das Zubereitungs-Gefäß (1), wobei der Brüheinsatz (3) aufweist:
(i) ein Ableitelement (4),
(ii) ein Filterelement (5) mit einer Aufnahme (5.1) für eine Aufgusssubstanz (6),
wobei das Ableitelement (4) zur Abzweigung einer Flüssigkeits-Teilmenge (2.2) aus dem Flüssigkeitsstrudel (2) und zum Zuführen der Flüssigkeits-Teilmenge (2.2) zum Filterelement (5) ausgelegt ist, und wobei das Filterelement (5) zum Einleiten der mit der Aufgusssubstanz (6) oder mit Extrakten der Aufgusssubstanz (6) angereicherten Flüssigkeit in das Sammelbad (2.4) ausgelegt ist.

2. Vorrichtung nach Anspruch 1, **dadurch gekennzeichnet, dass** das Rotationselement (1.5) dazu ausgelegt ist, einen Flüssigkeitsstrudel (2) zu erzeugen, der einen unteren Scheitelpunkt in einer Höhenebene Hs aufweist, und dass das Filterelement (5) oberhalb der Höhenebene Hs angeordnet ist.

3. Vorrichtung nach Anspruch 1 oder 2, **dadurch gekennzeichnet, dass** der Abstand zwischen dem Rotationselement (1.5) und dem Filterelement (5) in und entlang der Rotationsachse (1.6) im Bereich von 0,3cm bis 5cm, vorzugsweise im Bereich von 0,5cm bis 3cm, liegt.

4. Vorrichtung nach einem der Ansprüche 1 bis 3, **dadurch gekennzeichnet, dass** das Ableitelement (4) in einer Höhenebene H_{A} an einer Innenwand des Zubereitungs-Gefäßes (1) anliegt.

5. Vorrichtung nach einem der Ansprüche 1 bis 4, **dadurch gekennzeichnet, dass** das Ableitelement (4) einen ringförmigen Abschnitt mit einem Außenrand (4.2; 4.12), einer Ringoberseite und einer Ringunterseite aufweist, wobei der Außenrand (4.2; 4.12) an einer Innenwand des Zubereitungs-Gefäßes (1) anliegt, und wobei im Bereich des Außenrandes Öffnungen (4.6) zwischen Ringunterseite und Ringoberseite vorgesehen sind.

6. Vorrichtung nach Anspruch 5, **dadurch gekennzeichnet, dass** das Zubereitungs-Gefäß (1) einen Innenraum (1.4) aufweist, der sich mindestens über einen Teil seiner Höhe von oben nach unten verjüngt, und dass der Außenrand (4,2; 4.12) des Ableitelements (4) einen nach oben weisenden, umlaufenden und an der Innenwand anliegenden Kragen (4.12) aufweist, und wobei vorzugsweise sich mehrere nach innen ragende Längsrippen (1.7) von oben nach unten entlang von mindestens einem Teil der Höhe der Innenwand des Zubereitungs-Gefäßes (1) erstrecken, und dass der umlaufende Kragen (4.12) eine an die Längsrippen (1,7) angepasste Außenkontur mit Längsrillen (4.4) aufweist.

7. Vorrichtung nach einem der vorhergehenden Ansprüche, **dadurch gekennzeichnet, dass** die Aufnahme für die Aufgusssubstanz einen Brühraum (505.14) definiert, der einen Boden mit mindestens einer Bodenöffnung und eine Einfüllöffnung (505.13) aufweist, die vollständig oder teilweise von einem Filter (205.4; 405.4; 505.4) verschließbar oder verschlossen ist, und dass ein mit dem Brühraum (505.14) kommunizierendes Belüftungsmittel vorgesehen ist, das bevorzugt als zur Einfüllöffnung (505.13) offenes Entlüftungsrohr (506; 305.5) oder als Aufwölbung des Filters (205.4; 405.4) ausgebildet ist.

8. Vorrichtung nach einem oder mehreren der vorhergehenden Ansprüche, **dadurch gekennzeichnet, dass** das Zubereitungs-Gefäß (1) eine Topföffnung und einen Deckel (1.3) zum mindestens teilweisen Abdecken der Topföffnung aufweist, wobei der Deckel (1.3) eine Deckelunterseite hat, die in einer Höhenebene H_{D} verläuft, und wobei vom Ableitelement (4 ) ein Abstandselement (4.10; 506) nach oben absteht, das in einer Höhenebene H_{G} endet, wobei gilt: H_{D >} H_{G} > H_{D} + 1cm.

9. Erweiterungs-Einsatz (3) für ein Zubereitungs-Gefäß, insbesondere für das Zubereitungs-Gefäß einer Küchenmaschine, aufweisend:
(i) eine Ableitelement (4),
(ii) ein Filterelement (5) mit einer Aufnahme für eine Aufgusssubstanz (6),
wobei das Ableitelement (4) zur Abzweigung einer Flüssigkeits-Teilmenge (2.2) aus einem Flüssigkeitsstrudel (2) und zur Zufuhr der Flüssigkeits-Teilmenge (2.2) zum Filterelement (5) ausgelegt ist, und wobei das Filterelement (5) zum Ableiten einer mit der Aufgusssubstanz (6) oder mit Extrakten der Aufgusssubstanz (6) angereicherten Flüssigkeit in ein Sammelbad (2.4) ausgelegt ist.

10. Erweiterungs-Einsatz nach Anspruch 9, **dadurch gekennzeichnet, dass** das Ableitelement (4) einen ringförmigen Abschnitt mit einem Außenrand (4.2; 4.12), einem Innenrand, einer Ringoberseite und einer Ringunterseite aufweist, wobei im Bereich des Außenrandes (4.2; 4.12) Öffnungen (4.6) zwischen Ringunterseite und Ringoberseite vorgesehen sind und der Innenrand um das Filterelement (5) verläuft, und wobei der Außenrand (4.2; 4.12) bevorzugt einen schräg nach oben und außen weisenden, umlaufenden Kragen (4.12) aufweist, der mit Längsrillen (4.4) versehen ist.

11. Erweiterungs-Einsatz nach Anspruch 9 oder 10, **dadurch gekennzeichnet, dass** die Aufnahme für die Aufgusssubstanz einen Brühraum (505.14) definiert, der einen Boden mit mindestens einer Bodenöffnung (5.5) und eine Einfüllöffnung (505.13) aufweist, die vollständig oder teilweise von einem Filter (205.4; 405.4; 505.4) verschließbar oder verschlossen ist.

12. Erweiterungs-Einsatz nach Anspruch 11, **dadurch gekennzeichnet, dass** ein mit dem Brühraum (505.14) kommunizierendes Belüftungsmittel vorgesehen ist, das bevorzugt als zur Einfüllöffnung offenes Entlüftungsrohr (506; 305.5) oder als Aufwölbung des Filters (205.4; 405.4) ausgebildet ist.

13. Erweiterungs-Einsatz nach einem oder mehreren der Ansprüche 9 bis 12, **dadurch gekennzeichnet, dass** der Filter als Filterplatte (5.4, 205.4, 305.4) ausgebildet ist oder dass der Filter ein textiles Flächengebilde (405.5, 505.4) umfasst, das vorzugsweise an einem Stützteil (405.6) anliegt.

14. Erweiterungs-Einsatz nach einem der Ansprüche 9 bis 13, **dadurch gekennzeichnet, dass** das Ableitelement (4) ein Filterhalter-Aufnahmeteil (4.3; 504.3) aufweist, in das das Filterelement (5.1; 5.3; 5.4) einsetzbar oder an dem es ansetzbar ist.

15. Erweiterungs-Einsatz nach einem der Ansprüche 9 bis 14, **dadurch gekennzeichnet, dass** er ein Flüssigkeitsstrudel-Verstärkerelement (8) umfasst, das auf ein Rotationselement (1.5) aufsetzbar ist.
